(19) **Europäisches Patentamt / European Patent Office / Office européen des brevets**

(11) **EP 4 614 897 A1**

(12) **EUROPEAN PATENT APPLICATION**
published in accordance with Art. 153(4) EPC

(43) Date of publication:
**10.09.2025 Bulletin 2025/37**

(21) Application number: **22963980.2**

(22) Date of filing: **03.11.2022**

(51) International Patent Classification (IPC):
*H04L 27/00* (2006.01)

(52) Cooperative Patent Classification (CPC):
**H04L 27/00**

(86) International application number:
**PCT/CN2022/129678**

(87) International publication number:
**WO 2024/092670 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **RGTH**
**Patentanwälte PartGmbB**
**Neuer Wall 10**
**20354 Hamburg (DE)**

(54) **SIDELINK TRANSMISSION METHOD AND TERMINAL DEVICE**

(57)    Provided are a sidelink transmission method and a terminal device. The method comprises: a first terminal device performing sidelink transmission in a first slot, wherein the first slot at least comprises a first candidate transmission starting symbol and a second candidate transmission starting symbol, and the time domain position of the second candidate transmission starting symbol is located behind the time domain position of the first candidate transmission starting symbol, the second candidate transmission starting symbol not being used for mapping a first signal/channel corresponding to transmission that is based on the first candidate transmission starting symbol.

Perform, by a first terminal device, sidelink transmission in a first slot ⟶ 2110

FIG. 21

EP 4 614 897 A1

**Description**

**TECHNICAL FIELD**

This application relates to the field of communications technologies, and more specifically, to a sidelink transmission method and a terminal device.

**BACKGROUND**

In some communications systems, to improve a success rate of accessing an unlicensed spectrum by a terminal device, a slot structure including a plurality of candidate transmission starting symbols is introduced. Currently an impact of a plurality of candidate transmission starting symbols on a sidelink transmission process has not been studied yet.

**SUMMARY**

This application provides a sidelink transmission method and a terminal device. The following describes the aspects related to this application.

According to a first aspect, a sidelink transmission method is provided, and the method includes: performing, by a first terminal device, sidelink transmission in a first slot, where the first slot at least includes a first candidate transmission starting symbol and a second candidate transmission starting symbol, and a time domain location of the second candidate transmission starting symbol is after a time domain location of the first candidate transmission starting symbol. The second candidate transmission starting symbol is not used to map a first signal/channel corresponding to transmission that is based on the first candidate transmission starting symbol.

According to a second aspect, a sidelink transmission method is provided, and the method includes: performing, by a first terminal device, sidelink transmission in a first slot, where the first slot at least includes a first candidate transmission starting symbol and a second candidate transmission starting symbol, and a time domain location of the second candidate transmission starting symbol is after a time domain location of the first candidate transmission starting symbol. The first candidate transmission starting symbol corresponds to a first demodulation reference signal (demodulation reference signal, DM-RS) pattern, the second candidate transmission starting symbol corresponds to a second DM-RS pattern, and the second DM-RS pattern is determined based on one or more of the following: resource pool configuration information; or the first DM-RS pattern.

According to a third aspect, a sidelink transmission method is provided, and the method includes: determining, by a first terminal device, a transport block size corresponding to a physical sidelink shared channel (physical sidelink shared channel, PSSCH) in a first slot based on one or more of the following parameters: a first parameter, indicating a quantity of sidelink symbols; a second parameter, indicating a quantity of resource elements REs; or a third parameter, indicating a quantity of physical resource blocks (physical resource block, PRB). The first slot at least includes a first candidate transmission starting symbol and a second candidate transmission starting symbol that have different time domain locations.

According to a fourth aspect, a terminal device is provided, where the terminal device is a first terminal device, and the first terminal device includes: a communications module, configured to perform sidelink transmission in a first slot, where the first slot at least includes a first candidate transmission starting symbol and a second candidate transmission starting symbol, and a time domain location of the second candidate transmission starting symbol is after a time domain location of the first candidate transmission starting symbol. The second candidate transmission starting symbol is not used to map a first signal/channel corresponding to transmission that is based on the first candidate transmission starting symbol.

According to a fifth aspect, a terminal device is provided, where the terminal device is a first terminal device, and the first terminal device includes: a communications module, configured to perform sidelink transmission in a first slot, where the first slot at least includes a first candidate transmission starting symbol and a second candidate transmission starting symbol, and a time domain location of the second candidate transmission starting symbol is after a time domain location of the first candidate transmission starting symbol. The first candidate transmission starting symbol corresponds to a first DM-RS pattern, the second candidate transmission starting symbol corresponds to a second DM-RS pattern, and the second DM-RS pattern is determined based on one or more of the following: resource pool configuration information; or the first DM-RS pattern.

According to a sixth aspect, a terminal device is provided, where the terminal device is a first terminal device, and the first terminal device includes: a determining module, configured to determine a transport block size corresponding to a PSSCH in a first slot based on one or more of the following parameters: a first parameter, indicating a quantity of sidelink symbols; a second parameter, indicating a quantity of resource elements (resource element, RE); or a third parameter, indicating a quantity of PRBs. The first slot at least includes a first candidate transmission starting symbol and a second candidate transmission starting symbol that have different time domain locations.

According to a seventh aspect, a terminal device is provided, and the terminal device includes a transceiver, a memory, and a processor. The memory is configured to store a program, and the processor is configured to: invoke a program in the memory, and control the transceiver to receive or transmit a signal, to cause a terminal to execute the method according to any one of the first aspect to the third aspect.

According to an eighth aspect, an apparatus is provided, and the apparatus includes a processor, configured to invoke a program from a memory, to cause the apparatus to execute the method according to any one of the first aspect to the third aspect.

According to a ninth aspect, a chip is provided, and the chip includes a processor, configured to invoke a program from a memory, to cause a device on which the chip is installed to execute the method according to any one of the first aspect to the third aspect.

According to a tenth aspect, a computer-readable storage medium is provided, where the computer-readable storage medium stores a program, and the program causes a computer to execute the method according to any one of the first aspect to the third aspect.

According to an eleventh aspect, a computer program product is provided. The computer program product includes a program, where the program causes a computer to execute the method according to any one of the first aspect to the third aspect.

According to a twelfth aspect, a computer program is provided. The computer program causes a computer to execute the method according to any one of the first aspect to the third aspect.

After a slot structure including a plurality of candidate transmission starting symbols is introduced, a receive end cannot learn a symbol from which a first terminal device serving as a transmit end performs sidelink transmission, and thus the receive end may perform automatic gain control (automatic gain control, AGC) by using a newly introduced candidate transmission starting symbol (for example, the second candidate transmission symbol mentioned above). In view of this, in embodiments of this application, it is proposed to avoid mapping, in the second candidate transmission symbol, a first signal/channel corresponding to transmission based on a first candidate transmission symbol, thereby reducing an impact of AGC performed by the receive end in the second candidate transmission starting symbol on receiving performance of the first signal/channel.

**BRIEF DESCRIPTION OF DRAWINGS**

FIG. 1 is an example diagram of a system architecture of a wireless communications system to which embodiments of this application are applicable.

FIG. 2 is an example diagram of a scenario of sidelink communication within network coverage.

FIG. 3 is an example diagram of a scenario of sidelink communication with partial network coverage.

FIG. 4 is an example diagram of a scenario of sidelink communication outside network coverage.

FIG. 5 is an example diagram of a scenario of sidelink communication based on a central control node.

FIG. 6 is an example diagram of a broadcast-based sidelink communication mode.

FIG. 7 is an example diagram of a unicast-based sidelink communication mode.

FIG. 8 is an example diagram of a multicast-based sidelink communication mode.

FIG. 9A is an example diagram of a slot structure used for a sidelink communications system.

FIG. 9B is another example diagram of a slot structure used for a sidelink communications system.

FIG. 10 is an example diagram of a time domain relationship between a PSSCH DM-RS and second-stage sidelink control information (sidelink control information, SCI).

FIG. 11 is a comparison diagram of a slot structure corresponding to multiple transmissions of a PSSCH.

FIG. 12 is an example diagram of a mapping mode of a PSCCH DM-RS.

FIG. 13 is an example diagram of a time domain mapping mode of a PSSCH DM-RS.

FIG. 14 is an example diagram of a frequency domain mapping mode of a PSSCH DM-RS.

FIG. 15 is an example diagram of a mapping mode of a channel state information reference signal (channel state information reference signal, CSI-RS) in a sidelink.

FIG. 16 is an example diagram of a listen before talk (listen before talk, LBT) process.

FIG. 17 is an example diagram of an interlace structure.

FIG. 18 is an example diagram of an LBT subband structure.

FIG. 19 is an example diagram of a frequency domain relationship between a resource block set and a bandwidth part (bandwidth part, BWP) in a sidelink system.

FIG. 20 is an example diagram of a slot structure that supports multiple transmission starting symbols.

FIG. 21 is a schematic flowchart of a sidelink transmission method according to an embodiment of this application.

FIG. 22 is an example diagram of a scenario in which a DM-RS symbol overlaps a time domain location of a candidate transmission starting symbol.

FIG. 23 is an example diagram of a DM-RS symbol mapping mode according to an embodiment of this application.

FIG. 24 is an example diagram of a mapping mode of second-stage SCI according to an embodiment of this application.

FIG. 25 is an example diagram of a mapping mode of a PSSCH according to an embodiment of this application.

FIG. 26 is an example diagram of DM-RS patterns corresponding to two candidate transmission starting symbols according to an embodiment of this application.

FIG. 27 is another example diagram of DM-RS patterns corresponding to two candidate transmission starting symbols according to an embodiment of this application.

FIG. 28 is a schematic flowchart of a sidelink transmission method according to another embodiment of this application.

FIG. 29 is a schematic structural diagram of a terminal device according to an embodiment of this application.

FIG. 30 is a schematic structural diagram of a terminal device according to another embodiment of this application.

FIG. 31 is a schematic structural diagram of a terminal device according to another embodiment of this application.

FIG. 32 is a schematic structural diagram of an apparatus according to an embodiment of this application.

## DESCRIPTION OF EMBODIMENTS

### Communications system architecture

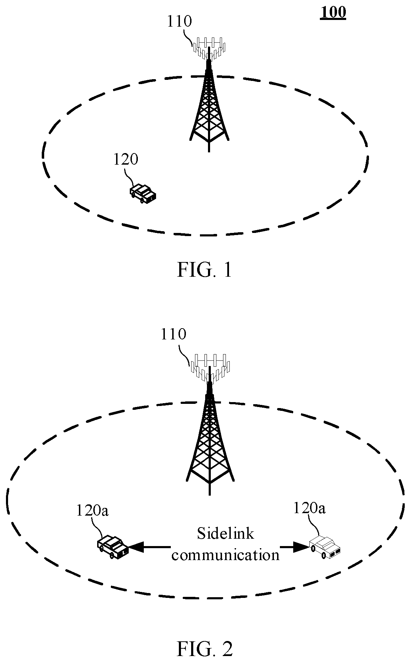

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions in the embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may act as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to function as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

**Sidelink communication in different network coverage statuses**

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may achieve higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, both the two terminal devices 120a are located within coverage of the network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

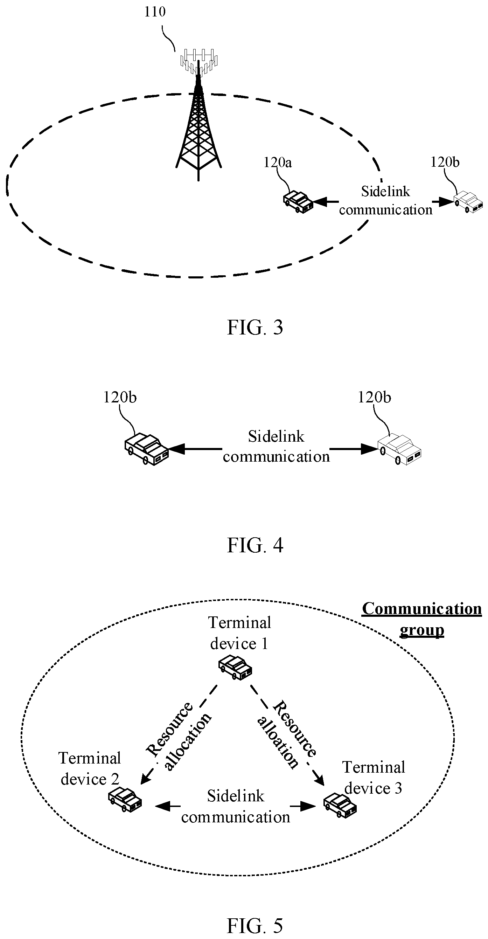

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

### Sidelink communication based on a central control node

FIG. 5 is an example diagram of a scenario of sidelink communication based on a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

### Mode of sidelink communication

Two modes of sidelink communication are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, such as a time-frequency resource) of a terminal device is allocated by a network device. The terminal device may transmit data on a sidelink based on the resource allocated by the network device. The network device may allocate, to the terminal device, a resource for single transmission; or may allocate, to the terminal device, a resource for semi-static transmission. The first mode may be applied to a scenario in which there is coverage of the network device, for example, the scenario shown in FIG. 2. In the scenario shown in FIG. 2, the terminal device 120a is located within the coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission based on a selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

### Data transmission modes of sidelink communication

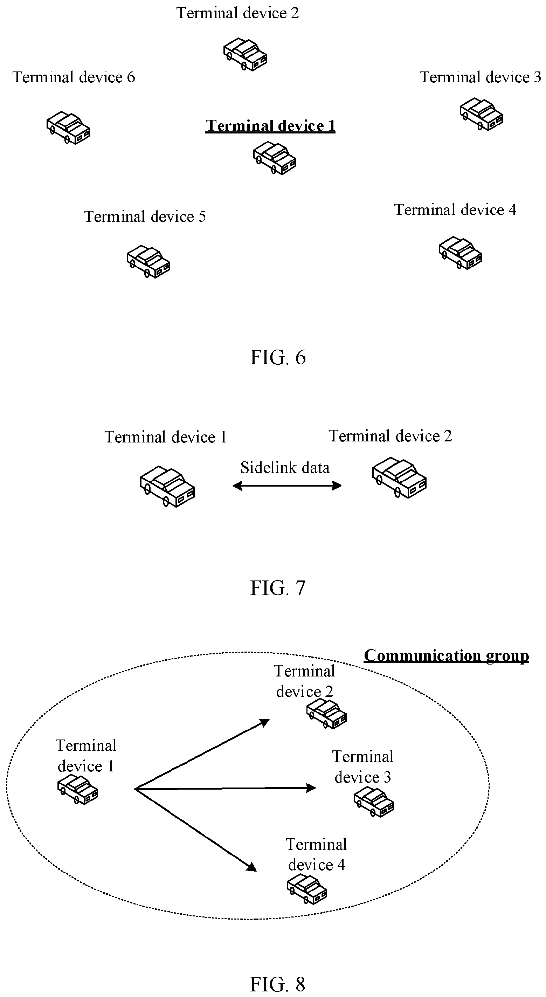

Some sidelink communications systems (such as long term evolution vehicle to everything (long term evolution vehicle to everything, LTE-V2X)) support a broadcast-based data transmission mode (briefly referred to as broadcast transmission below). For the broadcast transmission, a receive-end terminal may be any terminal device around a transmit-end terminal. For example, in FIG. 6, a terminal device 1 is a transmit-end terminal, and a receive-end terminal corresponding to the transmit-end terminal is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

For the unicast transmission, the receive-end terminal generally includes only one terminal device. For example, in FIG. 7, unicast transmission is performed between a terminal device 1 and a terminal device 2. The terminal device 1 may be a transmit-end terminal, and the terminal device 2 may be a receive-end terminal. Alternatively, the terminal device 1 may be a receive-end terminal, and the terminal device 2 may be a transmit-end terminal.

For the multicast transmission, the receive-end terminal may be terminal devices in a communication group, or the receive-end terminal may be terminal devices within a specific transmission distance. For example, in FIG. 8, a terminal device 1, a terminal device 2, a terminal device 3, and a terminal device 4 constitute a communication group. If the terminal device 1 transmits data, all the other terminal devices (the terminal device 2 to the terminal device 4) in the group may serve as receive-end terminals.

**Slot structure for sidelink communication**

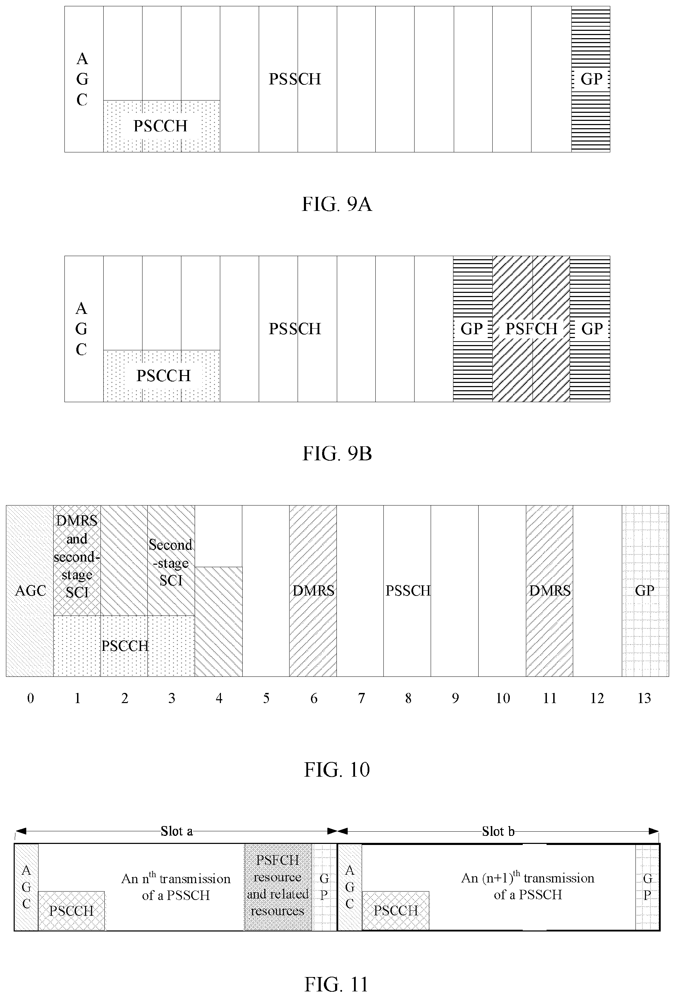

In a communications system, a frame, a subframe or a slot structure of sidelink communication may be defined. In some sidelink systems, a plurality of slot structures are defined. For example, in NR-V2X, two slot structures are defined. One of the two slot structures includes no physical sidelink feedback channel (physical sidelink feedback channel, PSFCH), as shown in FIG. 9A; and the other of the two slot structures includes a PSFCH, as shown in FIG. 9B.

A physical sidelink control channel (physical sidelink control channel, PSCCH) in the NR V2X may use a second sidelink symbol of a slot as a start position in time domain, and the PSCCH may occupy two or three symbols in time domain (all the symbols mentioned herein may refer to orthogonal frequency division multiplexing (orthogonal frequency division multiplexing, OFDM) symbols). The PSCCH may occupy a plurality of PRBs in frequency domain. For example, a quantity of PRBs occupied by the PSCCH may be selected from the following values: {10, 12, 15, 20, 25}.

To reduce complexity of blind detection performed by a terminal device on the PSCCH, generally, in one resource pool, only one symbol quantity and one PRB quantity are configured for the PSCCH. In addition, because the NR-V2X uses a sub-channel (sub-channel) as a minimum granularity for PSSCH resource assignment, the quantity of PRBs occupied by the PSCCH must be less than or equal to a quantity of PRBs included in one sub-channel in a resource pool.

Referring to FIG. 9A, for a slot structure that include no PSFCH, the second sidelink symbol in the slot may be used as a start location of a PSSCH in time domain in the NR-V2X. A last sidelink symbol in the slot is used as a guard period (guard period, GP), and a remaining symbol may be mapped to the PSSCH. A first sidelink symbol in the slot may be a repetition of the second sidelink symbol. Generally, a terminal device serving as a receive end uses the first sidelink symbol as a symbol for performing automatic gain control (automatic gain control, AGC). Thus, data in the first sidelink symbol is not generally used for data demodulation. The PSSCH may occupy K sub-channels in frequency domain, and each sub-channel may include M consecutive PRBs (values of K and M may be predefined in a protocol, or pre-configured, or configured by a network device, or determined depending on implementation of the terminal device).

FIG. 9B shows a slot structure including a PSFCH, and FIG. 9B schematically shows positions of symbols occupied by a PSFCH, a PSCCH, and a PSSCH in one slot. The slot structure mainly differs from the slot structure in FIG. 9A in that a second-to-last symbol and a third-to-last symbol in the slot are used for transmitting a PSFCH, and in addition, a symbol before the symbol used for transmitting the PSFCH is also used as a GP. It may be learned from the slot structure shown in FIG. 9B that, in one slot, a last symbol is used as a GP, the second-to-last symbol is used for transmitting the PSFCH, and data in the third-to-last symbol is the same as data in the second-to-last symbol used for transmitting the PSFCH, that is, the third-to-last symbol is used as a symbol for performing AGC, and a fourth-to-last symbol has a same function as the last symbol and is also used as a GP. In addition, a first symbol in the slot is used as an AGC, data in the symbol is the same as data in a second symbol in the slot. The PSCCH occupies three symbols, and remaining symbols may be used for transmitting the PSSCH.

**Sidelink PSSCH**

In some sidelink communications systems (such as an NR SL system), a PSSCH may be used to carry second-stage SCI (2nd stage SCI) and data information. A format of the second-stage SCI may be, for example, SCI 2-A, SCI 2-B, or SCI 2-C.

The second-stage SCI may be coded based on a polar code (polar code) coding scheme, and modulated by using a quadrature phase shift keying (quadrature phase shift keying, QPSK) modulation scheme.

A code rate of the second-stage SCI may be dynamically adjusted in a specific range, and the code rate used by the second-stage SCI may be indicated by first-stage SCI. Therefore, even if the code rate of the second-stage SCI changes, a terminal device serving as a receive end is unnecessary to perform blind detection on the second-stage SCI. A modulation symbol of the second-stage SCI may be mapped starting from a symbol in which a first DM-RS of the PSSCH is located and mapped first in frequency domain and then in time domain. In a symbol in which a DM-RS is located, the second-stage SCI may be mapped to an RE that is not occupied by the DM-RS. In an example of FIG. 10, the second-stage SCI occupies a symbol 1 to a symbol 4, and the second-stage SCI shares a symbol 1 with a first PSCCH DM-RS.

Data information of the PSSCH may be coded in a low density parity check (low density parity check, LDPC) scheme. In addition, a highest modulation order supported by a current PSSCH is 256 quadrature amplitude modulation (quadrature amplitude modulation, QAM).

In a resource pool, data information of the PSSCH may use a plurality of different modulation and coding scheme (modulation and coding scheme, MCS) tables. The plurality of different MCS tables may include, for example, a conventional 64 QAM MCS table, a 256 QAM MCS table, and a low spectral efficiency 64 QAM MCS table. In one transmission process of the PSSCH, an MCS table used by the terminal device serving as the transmit end may be indicated by using an "MCS table indication" field in the first-stage SCI.

To control a peak to average power ratio (peak to average power ratio, PAPR), the PSSCH is usually required to be transmitted on consecutive PRBs. In the NR SL system, a sub-channel is a minimum frequency domain resource granularity of the PSSCH. Therefore, to control the PAPR, the NR SL system usually requires the PSSCH to occupy consecutive sub-channels.

Further, in the NR SL system, for the PSSCH, at most dual-stream transmission is supported, and data on two transmission layers corresponding to dual-stream is mapped to two antenna ports by using a precoding unitary matrix. Currently, at most one transport block (transmission block, TB) can be transmitted in one PSSCH. When the PSSCH is transmitted in the dual-stream transmission mode, modulation symbols of the second-stage SCI on the two streams may be completely the same. Such design can ensure receiving performance of the second-stage SCI on a high-correlation channel.

In the NR SL system, a maximum number of retransmissions of one PSSCH is 32. Therefore, if there is a PSFCH resource in a resource pool, and a configuration period of the PSFCH resource is 2 or 4, for a plurality of times of transmission of a same PSSCH, a quantity of available symbols in a slot in which the PSSCH is located may change. For example, referring to FIG. 11, a PSSCH performs an $n^{th}$ transmission in a slot a, and performs an $(n+1)^{th}$ transmission in a slot b. It may be learned from FIG. 11 that, there are a PSFCH resource and related resources corresponding to the PSFCH resource (for example, an AGC symbol and a GP symbol that correspond to the PSFCH; for details, reference may be made to FIG. 9B) in the slot a, and there is no PSFCH in the slot b. Therefore, due to a change of the PSFCH resource, a quantity of available symbols in the slot in the $n^{th}$ transmission is different from that in the $(n+1)^{th}$ transmission. The change of the available symbols in the slot may cause a transmission block size (Transmission Block Size, TBS) corresponding to the PSSCH to change. Therefore, to ensure that the TBS of the PSSCH remains unchanged in a plurality of transmissions, the TBS may be calculated by using a quantity of PSFCH symbols determined based on indication information in the first-stage SCI, rather than using an actual quantity of PSFCH symbols. For detailed description, one may refer to description in the next section.

**Sidelink TBS**

In some sidelink communications systems (such as an NR SL system), for a PSSCH, a TBS determining mechanism of a physical downlink shared channel (physical downlink shared channel, PDSCH) and a physical uplink shared channel (physical uplink shared channel, PUSCH) in an NR system is still used, that is, a TBS is determined based on a reference value of a quantity of REs used for the PSSCH in a slot where the PSSCH is located, so that an actual code rate is as close to a target code rate as possible. In other words, the sidelink communications system determines the TBS by using a reference value of the quantity of REs of the PSSCH, rather than using an actual quantity of REs occupied by the PSSCH. This is to ensure that a quantity of REs used to determine the TBS remains unchanged in a PSSCH retransmission process, so that TBSs determined in different transmission processes for the PSSCH have a same size. A reference value $N_{RE}$ of the quantity of REs occupied by the PSSCH may be determined based on the formula (1):

$$N_{RE} = N'_{RE} \cdot n_{PRB} - N_{RE}^{SCI,1} - N_{RE}^{SCI,2} \quad (1)$$

In the formula (1), $n_{PRB}$ denotes a quantity of PRBs occupied by the PSSCH, $N_{RE}^{SCI,1}$ denotes a quantity of REs occupied by first-stage SCI ( $N_{RE}^{SCI,1}$ may include a quantity of REs occupied by a DM-RS of a PSCCH), $N_{RE}^{SCI,2}$ denotes a quantity of REs occupied by second-stage SCI, and $N'_{RE}$ denotes a reference quantity of REs available for the PSSCH in one PRB.

Herein $N'_{RE}$ may be determined based on the following formula (2):

$$N'_{RE} = N_{sc}^{RB}\left(N_{symb}^{sh} - N_{symb}^{PSFCH}\right) - N_{oh}^{PRB} - N_{RE}^{DMRS} \quad (2)$$

In the formula (2), $N_{sc}^{RB}$ denotes a quantity of subcarriers in one PRB, and a value of $N_{sc}^{RB}$ is generally 12. Herein $N_{symb}^{sh}$ denotes a quantity of symbols available for sidelink transmission in one slot, and $N_{symb}^{sh}$ does not generally include a last symbol (namely, a GP symbol) or a first symbol (namely, a symbol for AGC) in one slot. In an example of a slot structure shown in FIG. 10, $N_{symb}^{sh} = 12$. Herein $N_{symb}^{PSFCH}$ denotes a reference value of a quantity of symbols occupied by a PSFCH, a value of $N_{symb}^{PSFCH}$ may be indicated by a "PSFCH symbol quantity" field in the first-stage SCI, and the value of $N_{symb}^{PSFCH}$ is usually 0 or 3. Herein $N_{oh}^{PRB}$ denotes a reference value of a quantity of REs occupied by a phase tracking reference signal (phase tracking reference signals, PT-RS) and a CSI-RS, and a value of $N_{oh}^{PRB}$ may be configured by using a radio resource control (radio resource control, RRC) parameter. Herein $N_{RE}^{DMRS}$ denotes an average quantity of REs of a DM-RS pattern in one slot, and a value of $N_{RE}^{DMRS}$ is related to a DM-RS pattern supported in a resource pool, as shown in Table 1. Referring to Table 1, when the DM-RS pattern includes three patterns {2, 3, 4}, a value of $N_{RE}^{DMRS}$ is 18, that is, an average quantity of REs of the three DM-RS patterns is 18.

Table 1: Correspondence between a DM-RS pattern allowed in a resource pool and $N_{RE}^{DMRS}$

| DM-RS pattern | $N_{RE}^{DMRS}$ |
|---|---|
| {2} | 12 |
| {3} | 18 |
| {4} | 24 |
| {2.3} | 15 |
| {2.4} | 18 |
| {3.4} | 21 |
| {2, 3, 4} | 18 |

**Sidelink DM-RS**

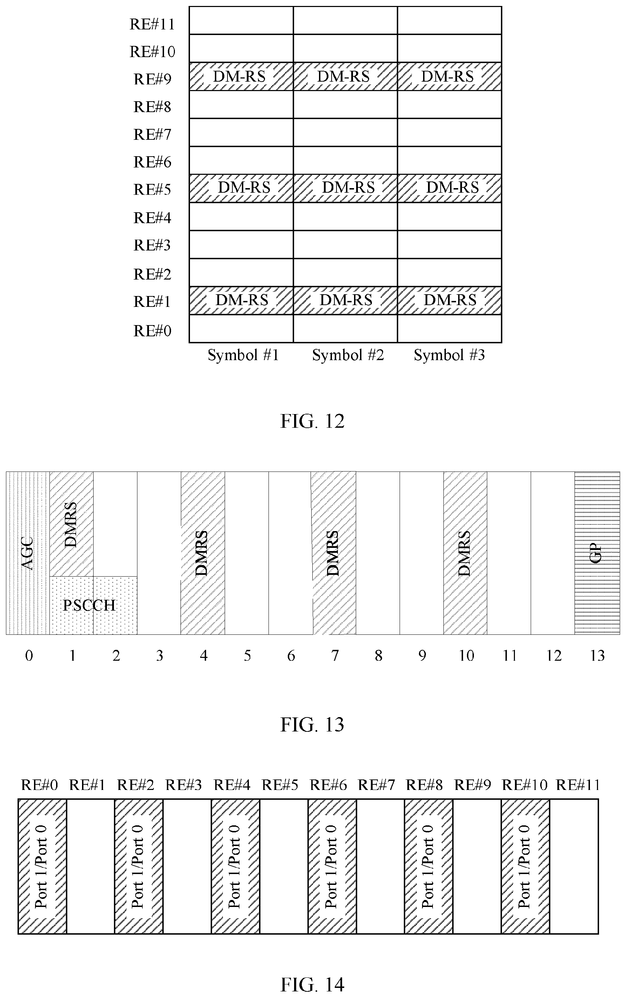

In an NR SL system, a DM-RS pattern of a PSCCH is the same as a DM-RS pattern of a PDCCH in an NR system, that is, there is a DM-RS on each symbol of the PSCCH, and the DM-RS is located on an RE corresponding to {# 1, #5, #9} in one PRB in frequency domain, as shown in FIG. 12.

A DM-RS sequence of the PSCCH may be generated by using formula (3):

$$r_l(m) = \frac{1}{\sqrt{2}}(1 - 2c(m)) + j\frac{1}{\sqrt{2}}(1 - 2c(m+1)) \quad (3)$$

In the formula (3), c(m) denotes a pseudo-random sequence. The pseudo-random sequence may be initialized according to the following formula (4):

$$c_{init} = \left(2^{17}\left(N_{symb}^{slot}n_{s,f}^{\mu} + l + 1\right)(2N_{ID} + 1) + 2N_{ID}\right) \bmod 2^{31} \quad (4)$$

In the formula (4), $l$ denotes an index of a symbol where a DM-RS is located in a slot, $n_{s,f}^{\mu}$ denotes an index of the slot in which the DM-RS is located in a system frame, $N_{symb}^{slot}$ denotes a quantity of symbols in one slot, and $N_{ID} \in \{0, 1, \cdots, 65535\}$. In a resource pool, a value of $N_{ID}$ may be configured or pre-configured by a network device.

A PSSCH of the NR SL system uses the design of the NR air interface (namely, the Uu interface), that is, using a plurality of PSSCH DM-RS patterns in time domain. In a resource pool, a quantity of available DM-RS patterns is related to a quantity of symbols (including a 1st AGC symbol) of the PSSCH in the resource pool. For a specific quantity of PSSCH symbols and PSCCH symbols, an available DM-RS pattern and a location of each DM-RS symbol in the DM-RS pattern may be determined based on Table 2.

Table 2: Quantity and locations of DM-RS symbols included in one slot for different quantities of PSSCH and PSCCH symbols

| Quantity of PSSCH symbols (including a 1st AGC symbol) | Location of DM-RS symbol (relative to a location of the 1st AGC symbol) | | | | | |
|---|---|---|---|---|---|---|
| | Quantity of PSCCH symbols being 2 | | | Quantity of PSCCH symbols being 3 | | |
| | Quantity of DM-RS symbols | | | Quantity of DM-RS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4,7 | | 4, 8 | 1,4,7 | |
| 10 | 3, 8 | 1,4,7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

For example, a quantity of PSSCH symbols is 13. Referring to FIG. 13, when a quantity of DM-RS symbols is 4, the four DM-RS symbols respectively occupy a first, a fourth, a seventh, and a tenth symbol locations (or symbol indexes) in a slot.

If a plurality of DM-RS patterns are configured in time domain in a resource pool, a specific DM-RS pattern used may be selected by a terminal device serving as a transmit end, and indicated in first-stage SCI. In this design, a high-speed moving terminal device is allowed to select a high-density DM-RS pattern, thereby ensuring accuracy of channel estimation. Correspondingly, a low-speed moving terminal device may use a low-density DM-RS pattern, thereby improving spectrum efficiency.

A manner of generating a PSSCH DM-RS sequence is similar to that of generating a PSCCH DM-RS sequence. A difference therebetween lies in a value of $N_{ID}$ in an initialization formula (corresponding to the formula (4)) of a pseudo-random sequence c(m). In the pseudo-random sequence c(m) used to generate the PSSCH DM-RS sequence, $N_{ID} = \sum_{i=0}^{L-1} p_i \cdot 2^{L-1-i}$, where $p_i$ denotes a $i$th cyclic redundancy check (cyclic redundancy check, CRC) of a PSCCH that schedules the PSSCH, $L$ denotes a quantity of bits of PSCCH CRC, and a value of $L$ is generally 24.

In the NR system, a PDSCH and a PUSCH support two types of frequency domain DM-RS patterns, that is, a DM-RS frequency domain type 1 and a DM-RS frequency domain type 2. Further, for each DM-RS frequency domain type, there are two different symbol types: a single-symbol type and a double-symbol type. The single-symbol DM-RS frequency domain type 1 may support four DM-RS ports. The single-symbol DM-RS frequency domain type 2 may support six DM-RS ports. A quantity of DM-RS ports supported by the double-symbol DM-RS frequency domain type 1 is twice as many as a quantity of DM-RS ports supported by the single-symbol DM-RS frequency domain type 1. A quantity of DM-RS ports supported by the double-symbol DM-RS frequency domain type 2 is twice as many as a quantity of DM-RS ports supported by the single-symbol DM-RS frequency domain type 2. However, in some sidelink communications systems (such as the NR SL system), because for the PSSCH, at most two DM-RS ports are required to be supported, this type of communications system generally supports only the single-symbol DM-RS frequency domain type 1. A DM-RS frequency domain pattern of this type is shown in FIG. 14.

**Sidelink CSI-RS**

To better support unicast communication, an NR-V2X system supports an SL CSI-RS. In the NR-V2X system, an SL CSI-RS is transmitted only if the following three conditions are met.

Condition 1: A terminal device is required to transmit a PSSCH corresponding to the SL CSI-RS, that is, the terminal device cannot transmit only the SL CSI-RS.

Condition 2: Sidelink CSI reporting is activated by using higher layer signalling.

Condition 3: In a case that sidelink CSI reporting is activated by using higher layer signalling, a corresponding bit in second-stage SCI transmitted by the terminal device triggers the sidelink CSI reporting.

A maximum quantity of ports supported by the SL CSI-RS is 2. When there are two ports, SL CSI-RSs for different ports are multiplexed in a code division manner on two adjacent REs of a same sidelink symbol, and a quantity of SL CSI-RSs for each port in one PRB is 1, that is, a density is 1. Therefore, the SL CSI-RSs in one PRB are transmitted in at most one sidelink symbol. A specific position of the sidelink symbol is determined by a terminal device that transmits the SL CSI-RSs.

Generally, to avoid affecting resource mapping of a PSCCH and second-stage SCI, the SL CSI-RS cannot be located in a same sidelink symbol as the PSCCH and the second-stage SCI.

In addition, because channel estimation precision of a sidelink symbol in which a PSSCH DM-RS is located is relatively high, and SL CSI-RSs for the two ports are required to occupy two consecutive REs in frequency domain, the SL CSI-RS and the PSSCH DM-RS cannot be transmitted by using a same sidelink symbol.

In some cases, a position of a sidelink symbol occupied by the SL CSI-RS may be indicated by a parameter sl-CSI-RS-FirstSymbol in PC5-RRC. In addition, a position of a first RE occupied by the SL CSI-RS in one PRB is indicated by a parameter "sl-CSI-RS-FreqAllocation" in the PC5 RRC. If the SL CSI-RS corresponds to one port, the parameter is a bitmap whose length is 12 and corresponds to 12 REs in one PRB. If the SL CSI-RS corresponds to two ports, the parameter is a bitmap whose length is 6. In this case, the SL CSI-RS occupies two REs $2f(1)$ and $2f(1) + 1$, where $f(1)$ denotes an identifier of a bit with a value of 1 in the bitmap.

A frequency domain position occupied by the SL CSI-RS is also determined by the terminal device that transmits the SL CSI-RS, and it should be noted that the frequency domain position determined for the SL CSI-RS cannot conflict with a frequency domain position occupied by a PT-RS.

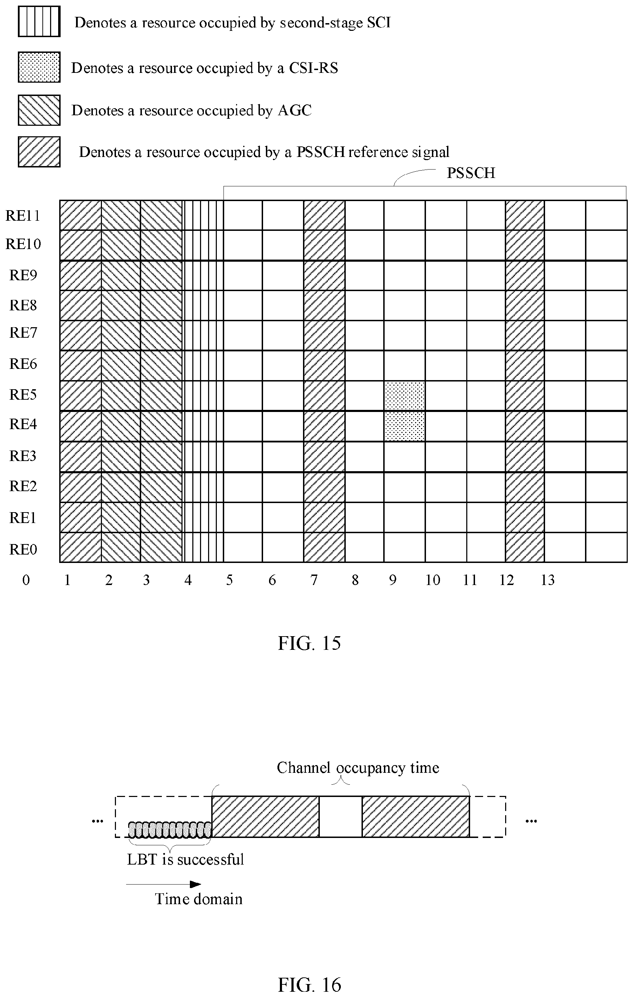

FIG. 15 is a schematic diagram of a time-frequency resource occupied by an SL CSI-RS. Referring to FIG. 15, it is assumed that a quantity of ports corresponding to the SL CSI-RS is 2, sl-CSI-RS-FirstSymbol indicates that a location of a sidelink symbol occupied by the SL CSI-RS is 8, and sl-CSI-RS-FreqAllocation indicates a location of a first RE occupied by the SL CSI-RS in one PRB is $[b_5, b_4, b_3, b_2, b_1, b_0] = [0,0,0,1,0,0]$.

**Unlicensed spectrum and channel listening**

An unlicensed spectrum is a spectrum that is specified by a country or a region for communication of a radio device. The spectrum is generally considered as a shared spectrum. In other words, communications devices in a same communications system or different communications systems may use the spectrum provided that a regulatory requirement set for the spectrum specified by the country or the region is met, and there is no need to apply for a dedicated spectrum grant from a government.

To enable various communications devices (or communications systems) that perform wireless communication by using an unlicensed spectrum to coexist on the spectrum, some countries or regions stipulate regulatory requirements to be met for using the unlicensed spectrum. For example, a communications device follows a rule of listen before talk (listen before talk, LBT). The so-called LBT means that a communications device is required to perform channel listening (sensing) first before transmitting a signal on a channel of an unlicensed spectrum. If a channel listening result indicates that the channel is idle, the communications device is allowed to transmit signals by using the channel of the unlicensed spectrum. If a channel listening result indicates that the channel is busy, the communications device is generally not allowed to transmit signals by using the channel of the unlicensed spectrum. To ensure fairness, in one time of transmission, duration for which the communications device performs signal transmission by using a channel of an unlicensed spectrum cannot exceed a maximum channel occupancy time (maximum channel occupancy time, MCOT). FIG. 16 shows an example in which a channel occupancy time is obtained by a communications device after successful performing LBT on a channel in unlicensed spectrum and the communications device performs signal transmission by using resources within the channel occupancy time.

Although channel listening based on LBT is not specified in a global regulation, the channel listening can achieve benefits such as avoiding communication and transmission interference between communications systems operating in shared spectrum and enabling friendly coexistence of the communications systems. Therefore, in a design process of an NR system operating in the unlicensed spectrum, channel listening is a feature required to be supported by communications devices in the system. From the perspective of network deployment for a system, channel listening includes two mechanisms: one is LBT for load based equipment (load based equipment, LBE), also referred to as dynamic channel listening or dynamic channel occupancy; and the other is LBT for frame based equipment (frame based equipment, FBE), also referred to as semi-persistent channel listening or semi-persistent channel occupancy.

The following mainly introduces several different types of LBT modes (namely, several different types of channel access modes).

An LBT mode of type 1 (Type 1 LBT mode) may also be referred to as multi-slot channel detection with random backoff based on contention window size adjustment. In the Type 1 LBT mode, a communications device may initiate channel occupation of duration $T_{mcot}$ based on a channel access priority p. The following table shows channel access priorities and corresponding parameters used when the terminal device performs the Type 1 LBT mode.

Table 3 Channel access parameters corresponding to different channel priorities

| Channel access priority (p) | $m_p$ | $CW_{min,p}$ | $CW_{max,p}$ | $T_{mcot,p}$ | Allowed $CW_p$ value |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

In Table 1, $m_p$ denotes a quantity of backoff slots corresponding to the channel access priority p, $CW_p$ denotes a size of a contention window corresponding to the channel access priority p, $CW_{min,p}$ denotes a minimum value of $CW_p$ corresponding to the channel access priority p, $CW_{max,p}$ denotes a maximum value of $CW_p$ corresponding to the channel access priority p, and $T_{mcot,p}$ denotes duration of maximum channel occupancy time corresponding to the channel access priority p. In the four channel access priorities in Table 1, p=1 is the highest priority.

If a network device uses the Type 1 LBT mode, the network device can transmit its own data during the channel occupancy time, and can also share the channel occupancy time (channel occupancy time, COT) with a terminal device. Correspondingly, if the terminal device uses the Type 1 LBT mode, the terminal device can transmit its own data during the channel occupancy time, and can also share the COT with the network device or another terminal device. For resource sharing within the COT, channel access may be performed in an LBT mode of Type 2 (Type 2 LBT mode). The LBT mode of Type 2 (Type 2 LBT mode) may also be referred to as a channel access mode based on a fixed-length channel monitoring slot. The Type 2 LBT mode includes an LBT mode of Type 2A (Type 2A LBT mode), an LBT mode of Type 2B (Type 2B LBT mode), and an LBT mode of Type 2C (Type 2C LBT mode).

In the Type 2A LBT mode, the communications device may perform channel detection of 25 $\mu$s. In other words, the communications device may start channel detection ahead of data transmission by 25 $\mu$s. The channel detection of 25 $\mu$s may include channel detection of 16 $\mu$s and channel detection of 9 $\mu$s. If both detection results indicate that a channel is idle, it may be considered that the channel is idle and channel access can be performed.

In the Type 2B LBT mode, the communications device may perform channel detection of 16 $\mu$s. In a channel detection process, if the communications device detects that a channel is idle for at least 5 $\mu$s in the 26 $\mu$s, and the channel is idle for more than 4 $\mu$s in the last 9 $\mu$s, it may be considered that the channel is idle.

In the Type 2C LBT mode, the communications device may transmit data directly through a channel without channel detection. In the Type 2C LBT mode, a time difference between a current transmission and a previous transmission is less than or equal to 16 $\mu$s. In other words, if the time difference between two transmissions is less than or equal to 16 $\mu$s, the two transmissions may be considered as a same transmission and channel detection is not required. It should be noted that, in the Type 2C LBT mode, transmission duration of the communications device is limited and usually cannot exceed 584 $\mu$s.

**Interlace structure**

In an NR-U (NR-based access to Unlicensed spectrum, NR-based access to unlicensed spectrum) system, if a terminal device is to perform communication in an unlicensed frequency band, it is stipulated in some regulations that a range of a frequency band occupied by the terminal device is typically required to be greater than or equal to 80% of a system bandwidth. Therefore, to enable more terminal devices to access a channel within a same period of time, a resource configuration manner based on an interlace (interlace) is defined in NR-U. An interlace may also be referred to as a comb.

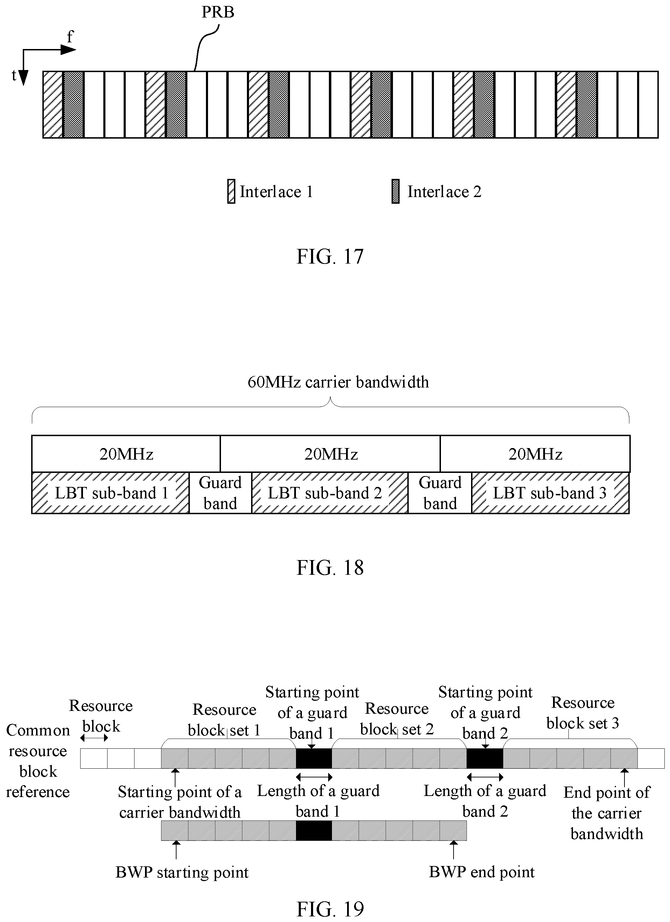

One interlace resource may include N PRBs that are discretely distributed in frequency domain. For example, if a total of M interlace resources are included within a frequency band range, location numbers of PRBs among N PRBs and included in an $m^{th}$ interlace are as follows: {m, M+m, 2M+m, 3M+m, ...}. For example, in FIG. 17, a system bandwidth includes 30 PRBs. The 30 PRBs include five interlace resources, and each interlace resource includes six PRBs. It may be seen from FIG. 17 that frequency-domain spacings between any two adjacent PRBs in one interlace are the same, that is, five PRBs are arranged between any two adjacent PRBs. It should be noted that PRBs included in one interlace resource may also be referred to as interlaced resource blocks (interlaced resource block, IRB). Therefore, the interlace is sometimes directly referred to as IRB.

**Resource block set in an NR-U system**

In the NR-U system, due to regulatory requirements on the use of unlicensed spectrum, transmission is typically performed at a granularity of 20 MHz each time. In the design of the NR system, large bandwidth and high throughput transmission are already considered. Therefore, transmission in the NR in unlicensed spectrum should not be limited to a bandwidth of 20 MHz. Therefore, the NR-U is required to support larger bandwidth transmission. The larger bandwidth transmission mentioned herein may refer to transmission at a bandwidth that is a multiple of 20 MHz.

For example, a terminal device may be configured with one or more bandwidth parts (bandwidth part, BWP). The BWP covers a large bandwidth, and generally covers a plurality of 20 MHz channel bandwidths. These 20 MHz bandwidths are referred to as LBT sub-bands in early stage of design of the NR-U, and there is a guard band between sub-bands, as shown in FIG. 18. The guard band is arranged to prevent interference between sub-bands caused by out-of-band power leakage (out-of-band power leakage). The interference mentioned herein is referred to as inter-sub-band interference. Inter-sub-band interference refers to interference caused to transmission of the terminal device on one sub-band due to transmission of another terminal device (or a communications device in another system) on a sub-band adjacent to the one sub-band.

Further, the LBT sub-band is also collectively referred to as a resource block set (resource block set, RB set). Resource block sets and guard bands between resource block sets may be configured in a manner shown in FIG. 19. Referring to FIG. 19, the network device may first configure a carrier bandwidth based on a common resource block (common resource block, CRB), and configure one or more guard bands (or referred to as intra-cell guard bands (intra-cell guard band)) in the carrier bandwidth. Configuration of a guard band may include a CRB position at a starting point of the guard band and a length of the guard band. After the configuration of the guard band is completed, the entire carrier bandwidth is divided into a plurality of resource block sets. Then, the network device may map the resource block sets to the BWP by configuring the BWP. It should be noted that it is required in a 3GPP protocol that the BWP configured by the network device includes an integer quantity of resource block sets. In the example shown in FIG. 19, one BWP includes two resource block sets: a resource block set 1 and a resource block set 2.

**A slot structure of a plurality of candidate transmission starting symbols**

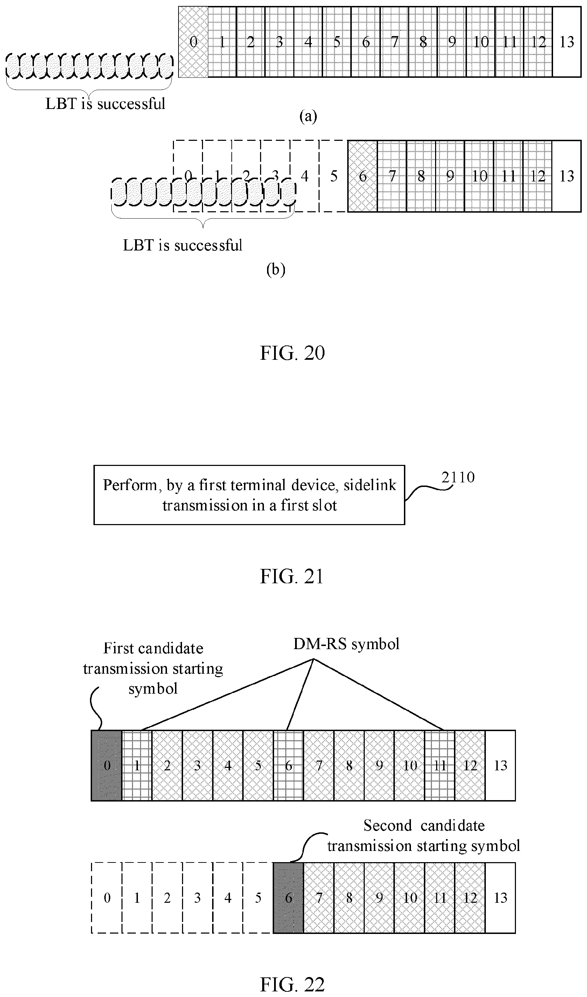

In some communications systems, for example, in a sidelink over unlicensed spectrum (sidelink over unlicensed spectrum, SL-U) system, to improve a success rate of accessing an unlicensed spectrum by a terminal device, a slot structure that includes a plurality of candidate transmission starting symbols in one slot is introduced for PSSCH/PSCCH transmission. As shown in FIG. 20, two candidate transmission starting symbols are configured in one slot, and are a symbol 0 and a symbol 6 respectively. If LBT succeeds before a symbol 0 for a terminal device, the terminal device may perform sidelink transmission starting from the symbol 0, as shown in (a) in FIG. 20. If LBT fails before a symbol 0 for the terminal device, but LBT succeeds before a symbol 6, the terminal device may perform sidelink transmission starting from the symbol 6, as shown in (b) in FIG. 20. With reference to the example in FIG. 20, it can be learned that because two candidate transmission starting points are introduced in one slot, a probability of accessing a channel by the terminal device is improved.

If one slot includes a plurality of candidate transmission starting symbols, because a receive end cannot learn a symbol from which a transmit end performs sidelink transmission, the receive end performs AGC adjustment by using the candidate transmission starting symbols. In other words, a plurality of candidate transmission starting symbols in one slot generally are symbols used for AGC. For example, still in FIG. 20, a symbol 0 and a symbol 6 in a slot are two candidate transmission starting symbols in one slot, and the symbol 0 and the symbol 6 are used as AGC symbols.

It can be learned that, when the terminal device starts to perform transmission on a first candidate transmission starting symbol, if the terminal device maps a signal/channel to a second candidate transmission starting symbol whose time domain location is after the first candidate transmission starting symbol, the receive end may fail to receive the signal/channel because the second candidate transmission starting symbol is used by a receive end for AGC adjustment, thus reducing overall performance of a communications system. A DM-RS is used as an example. If the terminal device maps the DM-RS to the second candidate transmission starting symbol, the receive end may fail to perform channel estimation by using the DM-RS, thus reducing channel estimation performance. Second-stage SCI is used as an example. If the terminal device maps the second-stage SCI to the second candidate transmission starting symbol, the receive end may fail to receive the second-stage SCI, thus causing an error in communication.

To resolve the foregoing problem, the following describes embodiments of this application in detail.

FIG. 21 is a schematic flowchart of a sidelink transmission method according to an embodiment of this application. The method illustrated in FIG. 21 may be executed by a first terminal device. The first terminal device may be any type of terminal device mentioned above.

Referring to FIG. 21, in step S2110, the first terminal device performs sidelink transmission in a first slot. The sidelink transmission may refer to sidelink transmission, or may refer to sidelink reception. The sidelink transmission may include transmission for one or more of the following: a PSCCH or a PSSCH.

The first slot may include (or be configured with) a plurality of candidate transmission starting symbols. In some implementations, the candidate transmission starting symbol may be a candidate transmission starting symbol for the PSCCH or the PSSCH. In other words, the PSCCH or the PSSCH may be transmitted starting from a candidate transmission starting symbol. It should be understood that, for transmitting starting from the candidate transmission starting symbol, it is unnecessary to require mapping a to-be-transmitted PSCCH or PSSCH on the candidate transmission starting symbol. For example, the candidate transmission starting symbol may be used as an AGC symbol, and the PSCCH or PSSCH may be mapped starting from a subsequent symbol of the candidate transmission starting symbol.

The candidate transmission starting symbol mentioned in embodiments of this application may also be referred to as or replaced with one of the following: a candidate transmission starting point, a symbol corresponding to a candidate transmission starting point, a candidate transmission starting point symbol, a candidate transmission start location, or a candidate transmission starting symbol location.

A quantity of candidate transmission starting symbols included in the first slot is not specifically limited in embodiments of this application. In some implementations, the first slot may include two candidate transmission starting symbols. In another implementation, the first slot may include three or more candidate transmission starting symbols.

For ease of description, the following mainly uses an example in which the first slot includes a first candidate transmission starting symbol and a second candidate transmission starting symbol for description. The first candidate transmission starting symbol mentioned in embodiments of this application may be a candidate transmission starting symbol whose time domain location is earlier in a plurality of candidate transmission starting symbols included in the first slot (earlier relative to a time domain location of the second candidate transmission starting symbol). The second candidate transmission starting symbol mentioned in embodiments of this application may be a candidate transmission starting symbol whose time domain location is later in a plurality of candidate transmission starting symbols included in the first slot (later relative to a time domain location of the first candidate transmission starting symbol). Certainly, the first slot may include only the first candidate transmission starting symbol and the second candidate transmission starting symbol; or the first slot may further include more candidate transmission starting symbols in addition to the first candidate transmission starting symbol and the second candidate transmission starting symbol.

In some implementations, the first candidate transmission starting symbol may correspond to a 1st candidate transmission starting symbol in the plurality of candidate transmission starting symbols included in the first slot (that is, a candidate transmission starting symbol whose time domain location is the earliest in the first slot), and the second candidate transmission starting symbol may correspond to any candidate transmission starting symbol different from the first candidate transmission starting symbol in the first slot.

In some implementations, the first candidate transmission starting symbol may correspond to an $i^{th}$ candidate transmission starting symbol ($i \neq 1$) in the plurality of candidate transmission starting symbols included in the first slot, and the second candidate transmission starting symbol may correspond to any candidate transmission starting symbol whose time domain location is after the $i^{th}$ candidate transmission starting symbol in a first time domain. For example, the first slot includes three candidate transmission starting symbols, the first candidate transmission starting symbol is a 2nd candidate transmission starting symbol in the three candidate transmission starting symbols, and the second candidate transmission starting symbol is a last candidate transmission starting symbol in the three candidate transmission starting symbols.

In some implementations, the second candidate transmission starting symbol is not used to map a first signal/channel corresponding to transmission based on the first candidate transmission starting symbol, so as to avoid degradation of performance of a communications system caused when a receive end fails to correctly receive the first signal/channel.

The second candidate transmission starting symbol being not used to map the first signal/channel corresponding to transmission based on the first candidate transmission starting symbol may include or may be replaced with one or more of the following: the second candidate transmission starting symbol is not used to map a first signal/channel determined based on the first candidate transmission starting symbol; or the second candidate transmission starting symbol is not used to map a first signal/channel corresponding to transmission starting from the first candidate transmission starting symbol; or the second candidate transmission starting symbol is not used to map a first signal/channel corresponding to transmission using the first candidate transmission starting symbol as a starting point.

In some implementations, the second candidate transmission starting symbol being not used to map the first signal/channel corresponding to transmission based on the first candidate transmission starting symbol may indicate that: the second candidate transmission starting symbol does not overlap a time domain location of the first signal/channel; or the first terminal device avoids that the second candidate transmission starting symbol overlaps a time domain location of the first signal/channel. For example, if the second candidate transmission starting symbol overlaps the time domain location of the first signal/channel, the first signal/channel is mapped to another symbol different from the second candidate transmission starting symbol in the first slot.

A type of the first signal/channel is not specifically limited in embodiments of this application. The first signal/channel may be any type of signal/channel corresponding to transmission based on the first candidate transmission starting symbol. In some embodiments, the first signal/channel may include one or more of the following: a first PSSCH; a first PSCCH; a first CSI-RS; a DM-RS of a first PSSCH; or second SCI.

With reference to a plurality of embodiments, the following uses an example in which the first signal/channel is different types of signals/channels, to describe a mapping mode of the first signal/channel in more detail.

**Embodiment 1: Avoiding that a DM-RS of a first PSSCH overlaps a time domain location of a second candidate transmission starting symbol**

The first PSSCH refers to a PSSCH corresponding to transmission based on a first candidate transmission starting symbol. Alternatively, the first PSSCH may be a PSSCH transmitted from a first candidate transmission starting symbol. The DM-RS of the first PSSCH may be used by a receive end to perform channel estimation, so as to demodulate data information in the first PSSCH. The DM-RS of the first PSSCH may be mapped to part of symbols in symbols corresponding to the first PSSCH. A specific mapping mode is related to a DM-RS pattern selected by a first terminal device. In an example of FIG. 13, a DM-RS may be mapped to a symbol 1, a symbol 4, a symbol 7, or a symbol 10 in a slot.

To maintain channel estimation performance, mapping the DM-RS of the first PSSCH on the second candidate transmission starting symbol can be avoided. In other words, a case that the DM-RS of the first PSSCH overlaps the time domain location of the second candidate transmission starting symbol may be avoided. There are a plurality of manners for avoiding a case that the DM-RS of the first PSSCH overlaps the time domain location of the second candidate transmission starting symbol. The following provides three specific implementations.

**Implementation 1:**

In Implementation 1, if a DM-RS pattern selected by a first terminal device includes a first DM-RS symbol that overlaps a time domain location of a second candidate transmission starting symbol, the first DM-RS symbol may be mapped to another symbol different from the second candidate transmission starting symbol. In other words, if the DM-RS pattern selected by the first terminal device includes the first DM-RS symbol that overlaps the time domain location of the second candidate transmission starting symbol, a mapping mode of a DM-RS is adjusted to avoid overlapping. In an example, the first DM-RS symbol may be mapped to a previous symbol or a subsequent symbol of the second candidate transmission starting symbol.

FIG. 22 is used as an example for description. Referring to FIG. 22, two candidate transmission starting symbols are configured in one slot, and are a symbol 0 and a symbol 6, respectively. In this example, a candidate transmission starting symbol indicated by the symbol 0 corresponds to the first candidate transmission starting symbol mentioned above, and a candidate transmission starting symbol indicated by the symbol 6 corresponds to the second candidate transmission starting symbol mentioned above. If the first terminal device performs sidelink transmission starting from the symbol 0, and a DM-RS pattern selected by the first terminal device includes three DM-RS symbols, it may be learned from Table 2 that the three DM-RS symbols are respectively located in the following symbol locations in one slot: a symbol 1, the symbol 6, and a symbol 11. With reference to FIG. 22, it may be learned that the DM-RS symbol 6 overlaps the second candidate transmission starting symbol in time domain. If a DM-RS is mapped to the three symbol locations, because a terminal device (hereinafter referred to as a second terminal device) serving as a receive end performs AGC adjustment by using the symbol 6, the second terminal device cannot perform channel estimation by using the DM-RS symbol carried in the symbol 6. In other words, available DM-RS symbols in the slot include only DM-RS symbols carried in the symbol 1 and the symbol 11, resulting in degrading of channel estimation performance.

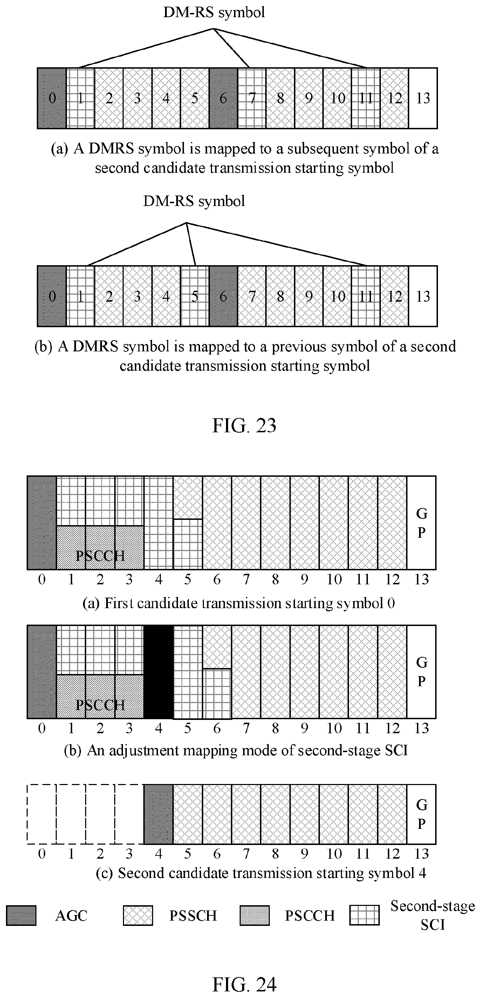

To improve channel estimation performance, if a DM-RS symbol of a first PSSCH overlaps the second candidate transmission starting symbol, the DM-RS symbol may be mapped to another symbol different from the second candidate transmission starting symbol, for example, a previous symbol or a subsequent symbol of the second candidate transmission starting symbol. Referring to part (a) of FIG. 23, the DM-RS symbol is not mapped to the symbol 1, the symbol 6, and the symbol 11, but is mapped to the symbol 1, a symbol 7, and the symbol 11. That is, a DM-RS that originally required to be mapped to the symbol 6 is mapped to a subsequent symbol of the symbol 6, namely, the symbol 7. Referring to part (b) of FIG. 23, the DM-RS symbol is not mapped to the symbol 1, the symbol 6, and the symbol 11, but is mapped to the symbol 1, a symbol 5, and the symbol 11. That is, a DM-RS that originally required to be mapped to the symbol 6 is mapped to a previous symbol of the symbol 6, namely, the symbol 5.

**Implementation 2:**

in Implementation 2, the first terminal device does not expect to select a DM-RS pattern including a DM-RS symbol that overlaps the time domain location of the second candidate transmission starting symbol. Alternatively, the first terminal device does not expect to receive a DM-RS pattern including a DM-RS symbol that overlaps the time domain location of the second candidate transmission starting symbol.

For example, the first terminal device may acquire a time domain location of a candidate transmission starting symbol in a slot based on configuration information. If the first terminal device performs transmission starting from the first candidate transmission starting symbol, the first terminal device does not select a DM-RS pattern that includes a DM-RS symbol that overlaps the time domain location of the second candidate transmission starting symbol. Similarly, as a receive end, the first terminal device does not expect to receive a DM-RS pattern including a DM-RS symbol that overlaps the time domain location of the second candidate transmission starting symbol.

Still in an example of the scenario shown in FIG. 22, two candidate transmission starting symbols are configured in one slot, and are respectively a symbol 0 and a symbol 6. In addition, assuming that a PSCCH occupies two symbols, it may be learned from Table 2 that, for sidelink transmission starting from the first candidate transmission starting symbol, a DM-RS pattern configured in a resource pool includes three patterns, namely, a pattern of two DM-RS symbols, a pattern of three DM-RS symbols, and a pattern of four DM-RS symbols. As shown in FIG. 22, DM-RS symbols corresponding to the pattern of three DM-RS symbols are respectively a symbol 1, the symbol 6, and a symbol 11, where the symbol 6 overlaps the second candidate transmission starting symbol. Therefore, in Implementation 2, the first terminal device does not select the pattern of three DM-RS symbols, but only selects the pattern of two DM-RS symbols or the pattern of four DM-RS symbols. Similarly, a receive-end terminal does not expect to receive the pattern of three DM-RS symbols.

**Implementation 3:**

In implementation 3, the first terminal device may acquire configuration information (the configuration information may include, for example, sidelink BWP configuration information and/or resource pool configuration information). The configuration information may be used to configure a DM-RS pattern available in a resource pool, and the DM-RS pattern configured by using the configuration information does not include a symbol that overlaps the time domain location of the second candidate transmission starting symbol. In other words, when a DM-RS pattern is configured by using the configuration information, a DM-RS pattern including a symbol that overlaps the time domain location of the second candidate transmission starting symbol is not configured.

For example, when the second candidate transmission starting symbol is configured by using the configuration information, and when a DM-RS pattern available in a resource pool is configured, the configured DM-RS pattern does not overlap the time domain location of the second candidate transmission starting symbol, or a DM-RS pattern that overlaps the second candidate transmission starting symbol is not configured.

For example, it is determined, based on the configuration information, that a slot includes two candidate transmission starting symbols, which are respectively the first candidate transmission starting symbol located at a symbol 0 and the second candidate transmission starting symbol located at a symbol 6. For the first candidate transmission starting symbol, a total quantity of symbols available for sidelink transmission in a slot is 13 (not including a last GP symbol in the slot), that is, all symbols (not including the last GP symbol) in the slot may be used for sidelink transmission. In addition, it is determined based on the configuration information that a PSCCH in the resource pool occupies two symbols. Therefore, a DM-RS pattern supported in the resource pool may be configured, so that the DM-RS pattern supported in the resource pool includes a DM-RS pattern whose quantity of DM-RS symbols is 2 or 4, and does not include a DM-RS pattern whose quantity of DM-RS symbols is 3. When a quantity of DM-RS symbols included in the DM-RS pattern is 2, it may be learned from Table 2 that symbols corresponding to the DM-RS pattern are respectively located in a symbol 3 and a symbol 10. When a quantity of DM-RS symbols included in the DM-RS pattern is 4, symbols corresponding to the DM-RS pattern are respectively located in a symbol 1, a symbol 4, a symbol 7, and the symbol 10. None of DM-RS symbols corresponding to the foregoing two DM-RS patterns overlaps the time domain location of the second candidate transmission starting symbol (namely, the symbol 6). When a quantity of DM-RS symbols included in the DM-RS pattern is 3, it may be learned from Table 2 that symbols corresponding to the DM-RS pattern are respectively located in the symbol 1, the symbol 6, and a symbol 11. A DM-RS symbol corresponding to the DM-RS pattern overlaps the time domain location of the second candidate transmission starting symbol (namely, the symbol 6). Therefore, when a DM-RS pattern supported in a resource pool is configured, the DM-RS pattern is not configured.

For another example, it is determined, based on the configuration information, that a slot includes two candidate transmission starting symbols, which are respectively the first candidate transmission starting symbol located at a symbol 0 and the second candidate transmission starting symbol located at a symbol 4. For the first candidate transmission starting symbol, a total quantity of symbols available for sidelink transmission in a slot is 13 (not including a last GP symbol in the slot), that is, all symbols (not including the last GP symbol) in the slot may be used for sidelink transmission. In addition, it is determined based on the configuration information that a PSCCH in the resource pool occupies three symbols. Therefore, a DM-RS pattern supported in the resource pool may be configured, so that the DM-RS pattern supported in the resource pool includes a DM-RS pattern whose quantity of DM-RS symbols is 3, and does not include a DM-RS pattern whose quantity of DM-RS symbols is 2 or 4. When a quantity of DM-RS symbols included in the DM-RS pattern is 2, it may be learned from Table 2 that symbols corresponding to the DM-RS pattern are respectively located in a symbol 4 and a symbol 10. When a quantity of DM-RS symbols included in the DM-RS pattern is 4, symbols corresponding to the DM-RS pattern are respectively located in a symbol 1, a symbol 4, a symbol 7, and the symbol 10. DM-RS symbols corresponding to the foregoing two DM-RS patterns overlap the time domain location of the second candidate transmission starting symbol (namely, the symbol 4). Therefore, during configuring of a DM-RS pattern supported in a resource pool, the DM-RS patterns are not configured.

**Embodiment 2: Avoiding that second-stage SCI overlaps a time domain location of a second candidate transmission starting symbol**

In some implementations, the second-stage SCI may include, for example, SCI 2-A, SCI 2-B, or SCI 2-C.

In some implementations, if a symbol used to map the second-stage SCI overlaps the time domain location of the second candidate transmission starting symbol, the second-stage SCI may be mapped to another symbol different from the second candidate transmission starting symbol in a slot. For example, if the symbol used to map the second-stage SCI overlaps the time domain location of the second candidate transmission starting symbol, the second-stage SCI may be mapped to a subsequent symbol of the second candidate transmission starting symbol. Further, in some implementations, second-stage SCI after the second-stage SCI may be correspondingly mapped in a next symbol.

For example, as shown in FIG. 24, it is determined, based on the configuration information, that a slot includes two candidate transmission starting symbols, which are respectively the first candidate transmission starting symbol located at a symbol 0 and the second candidate transmission starting symbol located at a symbol 4. Because the first candidate transmission starting symbol is located at the symbol 0, compared with the first candidate transmission starting symbol, a total quantity of symbols available for sidelink transmission in the slot is 13 (not including a last GP symbol in the slot), that is, all symbols (not including the last GP symbol) in the slot may be used for sidelink transmission. When a first terminal device performs transmission starting from the first candidate transmission starting symbol, second-stage SCI corresponding to the first candidate transmission starting symbol maps starting from a $1^{st}$ DM-RS symbol (such as a symbol 1 in part (a) of FIG. 24), and ending at a symbol 5. In the symbol 1 to the symbol 5, the symbol 4 used to map the second-stage SCI overlaps a time domain location of the second candidate transmission starting symbol. Therefore, to avoid an impact of the second candidate transmission starting symbol on performance of detection of the second-stage SCI, the second-stage SCI is not mapped to the symbol 4, and mapping continues to be performed from the symbol 5, as shown in part (b) of FIG. 24.

**Embodiment 3: Avoiding that a first PSSCH (or data information in the first PSSCH) overlaps a time domain location of a second candidate transmission starting symbol**

As mentioned above, the second candidate transmission starting symbol is generally used for AGC adjustment at a receive end, and therefore data in the symbol is not generally used for demodulation. To reduce an impact of the second candidate transmission starting symbol on demodulation performance of the first PSSCH, if a symbol used to map the first PSSCH overlaps the time domain location of the second candidate transmission starting symbol, the first PSSCH may not be mapped to the second candidate transmission starting symbol. For example, the first PSSCH may be mapped from a subsequent symbol of the second candidate transmission starting symbol.

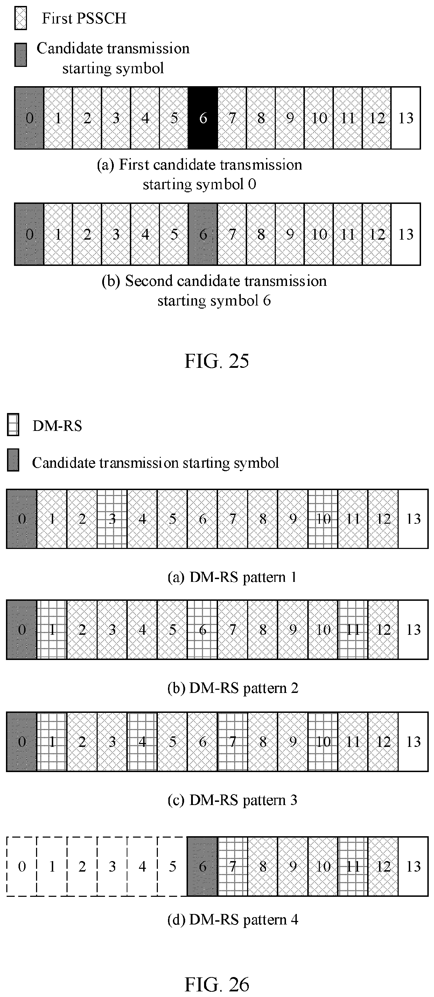

As shown in FIG. 25, two candidate transmission starting symbols are configured in a slot, which are respectively a first candidate transmission starting symbol located at a symbol 0 and a second candidate transmission starting symbol located at a symbol 6. When the first PSSCH is transmitted starting from a first candidate transmission location (namely, the symbol 0), resource mapping of the first PSSCH starts from a symbol 1 (symbol 0 is used as an AGC symbol, and data in the symbol is a repetition of data in the symbol 1). It may be learned from part (a) of FIG. 25, the first PSSCH is mapped to symbols 1 to 5, 7 to 12, and is not mapped to the symbol 6.

In some implementations, a TBS of a PSSCH may be determined without considering the second candidate transmission starting symbol.

**Embodiment 4: Avoiding that a first PSCCH overlaps a time domain location of a second candidate transmission starting symbol**

In Embodiment 4, the time domain location of the second candidate transmission starting symbol may be configured, so that the second candidate transmission starting symbol does not overlap the time domain location of the first PSCCH.

For example, to avoid overlapping of the second candidate transmission starting symbol with the first PSCCH, a symbol index corresponding to the second candidate transmission starting symbol may be set to be greater than a symbol index corresponding to a last symbol in symbols used to map a PSCCH. In an example in which a symbol index corresponding to a first candidate transmission starting symbol is $I_1$, a symbol index corresponding to the second candidate transmission starting symbol is $I_2$, and a quantity of symbols corresponding to the first PSCCH is A, the symbol index corresponding to the second candidate transmission starting symbol may be set to meet: $I_2 > I_1 + A$ or $I_2 \geq I_1 + A + 1$. In another example in which a symbol index corresponding to the second candidate transmission starting symbol is $I_1$, a symbol index corresponding to a $1^{st}$ symbol to which the first PSCCH is mapped is $I_3$, and a quantity of symbols corresponding to the first PSCCH is A, the symbol index corresponding to the second candidate transmission starting symbol may be set to meet: $I_2 > I_3 + A - 1$ or $I_2 \geq I_3 + A$.

**Embodiment 5: Avoiding that a first CSI-RS overlaps a time domain location of a second candidate transmission starting symbol**

In Embodiment 5, a first terminal device may generate or acquire second configuration information. The second configuration information may include resource pool configuration information and/or PC5-RRC signalling. The second configuration information may be used to configure a symbol of the first CSI-RS. The symbol of the first CSI-RS may not include a symbol that overlaps the time domain location of the second candidate transmission starting symbol. For example, if the second candidate transmission starting symbol is located at a symbol B, and a symbol used to map a CSI-RS and corresponding to transmission with a first candidate transmission starting symbol as a starting point includes a symbol C, values of B and C are not the same. In other words, during configuration of the second candidate transmission starting symbol and/or the symbol corresponding to the CSI-RS, the second candidate transmission starting symbol and the symbol corresponding to the CSI-RS are not configured in a same symbol. In a more specific example, the second candidate transmission starting symbol is configured to be at the symbol B in the resource pool configuration information. When symbol information of the CSI-RS is configured by using the PC5-RRC signalling, the configured symbol corresponding to the CSI-RS does not include the symbol B.

In some implementations, if the first CSI-RS overlaps the time domain location of the second candidate transmission starting symbol, the symbol of the first CSI-RS may be mapped to a previous symbol or a subsequent symbol of the second candidate transmission starting symbol.

As mentioned above, the second candidate transmission starting symbol is not used for mapping a first channel/signal. In some implementations, the second candidate transmission starting symbol may be used for carrying duplicate data of data in the previous symbol or the subsequent symbol of the second candidate transmission starting symbol. The duplicate data may include one or more of the following: second-stage SCI, a PSSCH, a DM-RS, or a PSCCH.

For example, in part (b) of FIG. 24, when a symbol used to map the second-stage SCI overlaps the time domain location of the second candidate transmission starting symbol, the second-stage SCI is not mapped to the second candidate transmission starting symbol, but mapped to a next symbol of the second candidate transmission starting symbol. In this case, data carried in the second candidate transmission starting symbol may be duplicate data of data carried in a subsequent symbol or a previous symbol of the second candidate transmission starting symbol. For example, data carried in a symbol 4 may be duplicate data of data (which may include second-stage SCI, a PSSCH, a DM-RS, and the like) carried in a symbol 5. Alternatively, data carried in a symbol 4 may be duplicate data of data (which may include second-stage SCI, a PSSCH, a DM-RS, a PSCCH, or the like) carried in a symbol 3.

For example, in FIG. 25, a PSSCH is mapped to symbols 1 to 5, and symbols 7 to 12. A symbol 6 may be used to carry data in the symbol 7 or symbol 5, that is, data in the symbol 7 or symbol 5 may be copied into the symbol 6. If the symbol 7 or symbol 5 includes a DM-RS or another signal, the DM-RS or another signal is also copied into the symbol 6.

An impact of introduction of a plurality of candidate transmission starting symbols on mapping of a signal/channel is discussed above. The introduction of the plurality of candidate transmission starting symbols may also affect configuration and/or indication manner of a DM-RS pattern, which will be discussed below.

DM-RS patterns supported in a resource pool are usually configured based on the resource pool configuration information. In actual sidelink transmission, the first terminal device may select one DM-RS pattern from the DM-RS patterns supported in the resource pool, and the selected DM-RS pattern is indicated in first-stage SCI. When a plurality of candidate transmission starting symbols are configured in a slot, how to configure the DM-RS patterns supported in the resource pool or how to indicate a DM-RS pattern also requires to be resolved. In an example of the first candidate transmission starting symbol and the second candidate transmission starting symbol, because a time domain location of the first candidate transmission starting symbol is different from a time domain location of the second candidate transmission starting symbol, a DM-RS pattern (hereinafter referred to as a second DM-RS pattern) corresponding to the second candidate transmission starting symbol may be different from a DM-RS pattern (hereinafter referred to as a first DM-RS pattern) corresponding to the first candidate transmission starting symbol. Therefore, a rule of determining the second DM-RS pattern is required to be introduced.

In some implementations, the second DM-RS pattern may be determined based on the resource pool configuration information, or may be determined based on the first DM-RS pattern. The following describes the foregoing two manners of determining the second DM-RS pattern.

**Manner 1 of determining the second DM-RS pattern: based on the resource pool configuration information**

In some implementations, first configuration information and second configuration information may be set in the resource pool configuration information, where the first configuration information is used to configure the first DM-RS pattern, and the second configuration information is used to configure the second DM-RS pattern. For example, the first configuration information included in the resource pool configuration information may be sl-PSSCH-DM-RS-TimePattern-List-r16 SEQUENCE (SIZE (1..3)) OF INTEGER (2..4). The second configuration information included in the resource pool configuration information may be sl-PSSCH-DM-RS-TimePatternList-r18 SEQUENCE (SIZE (1..3)) OF INTEGER (2..4). Based on the foregoing two types of configuration information, the first DM-RS pattern and the second DM-RS pattern may be separately configured.

In some implementations, the first configuration information may be the same as the second configuration information, that is, both the first DM-RS pattern and the second DM-RS pattern are configured by using same configuration information.

After the first DM-RS pattern and the second DM-RS pattern are configured, if the first terminal device performs transmission starting from the first candidate transmission starting symbol, an actually used DM-RS pattern may be selected from the first DM-RS pattern. If the first terminal device performs transmission starting from the second candidate transmission starting symbol, an actually used DM-RS pattern may be selected from the second DM-RS pattern.

In some implementations, if the first terminal device performs sidelink transmission starting from the first candidate transmission starting symbol, first-stage SCI transmitted by the first terminal device is used to indicate index information associated with the first DM-RS pattern.

In some implementations, if the first terminal device performs sidelink transmission starting from the second candidate transmission starting symbol, first-stage SCI transmitted by the first terminal device is used to indicate index information associated with the second DM-RS pattern.

In some implementations, if the first terminal device performs sidelink transmission starting from the first candidate transmission starting symbol, a quantity of information bits included in a DM-RS information field (which may be used to carry DM-RS pattern indication information) in first-stage SCI is determined based on a quantity of DM-RS patterns included in the first DM-RS pattern. For example, a quantity of information bits included in the DM-RS information field is $\left\lceil log_2(N_{pattern1}) \right\rceil$, where $N_{pattern1}$ denotes a total quantity of DM-RS patterns corresponding to a configured first candidate transmission start location, and $\left\lceil log_2(N_{pattern1}) \right\rceil$ denotes performing a ceiling operation on $log_2(N_{pattern1})$.

In some implementations, if the first terminal device performs sidelink transmission starting from the second candidate transmission starting symbol, a quantity of information bits included in a DM-RS information field in first-stage SCI is determined based on a quantity of DM-RS patterns included in the second DM-RS pattern. For example, a quantity of information bits included in the DM-RS information field is $\left\lceil log_2(N_{pattern2}) \right\rceil$, where $N_{pattern2}$ denotes a total quantity of DM-RS patterns corresponding to a configured first candidate transmission start location, and $\left\lceil log_2(N_{pattern2}) \right\rceil$ denotes performing a ceiling operation on $log_2(N_{pattern2})$.

In some implementations, if a quantity of DM-RS patterns included in the first DM-RS pattern is 1, the first-stage SCI may not include a DM-RS information field.

In some implementations, if a quantity of DM-RS patterns included in the second DM-RS pattern is 1, second-stage SCI may not include a DM-RS information field.

The following provides a specific example.

First, it may be determined, based on configuration information, that a slot includes the first candidate transmission starting symbol and the second candidate transmission starting symbol, which respectively correspond to a symbol 0 and a symbol 6. For the first candidate transmission starting symbol 0, a quantity of symbols available for sidelink transmission in the slot is 13 (not including a last GP symbol in the slot), that is, all symbols (not including the last GP symbol) in the slot may be used for sidelink transmission. For the second candidate transmission starting symbol 6, a quantity of symbols available for sidelink transmission in the slot is 7 (not including a last GP symbol in the slot), that is, all symbols (not including the last GP symbol) starting from the symbol 6 in the slot may be used for sidelink transmission. There are two symbols occupied by a PSCCH in a resource pool. The resource pool configuration information may include first configuration information and second configuration information, which are respectively used to configure a first DM-RS pattern (corresponding to the first candidate transmission starting symbol 0) and a second DM-RS pattern (corresponding to the second candidate transmission starting symbol 6).

The first DM-RS pattern configured by the first configuration information may include, for example, three DM-RS patterns. The three DM-RS patterns respectively include two DM-RS symbols (hereinafter referred to as a DM-RS pattern 1), three DM-RS symbols (hereinafter referred to as a DM-RS pattern 2), and four DM-RS symbols (hereinafter referred to as a DM-RS pattern 3). It may be learned from Table 2 that, relative locations of symbols in the DM-RS pattern 1 relative to a first sidelink transmission starting symbol are 3 and 10, respectively. Because the first sidelink transmission starting symbol is a symbol 0, the symbols in the DM-RS pattern 1 are located at a symbol 3 and a symbol 10. Relative locations of symbols in the DM-RS pattern 2 relative to a first sidelink transmission starting symbol are 1, 6, and 11, respectively. Because the first sidelink transmission starting symbol is a symbol 0, the symbols in the DM-RS pattern 2 are located at a symbol 1, a symbol 6, and a symbol 11. Relative locations of symbols in the DM-RS pattern 3 relative to a first sidelink transmission starting symbol are 1, 4, 7, and 10, respectively. Because the first sidelink transmission starting symbol is a symbol 0, the symbols in the DM-RS pattern 3 are located at a symbol 1, a symbol 4, a symbol 7, and a symbol 10. For location arrangement of the DM-RS patterns 1 to 3 in a slot, reference may be made to parts (a) to (c) of FIG. 26.

The second DM-RS pattern configured by using the second configuration information may include, for example, one DM-RS pattern. The DM-RS pattern includes two DM-RS symbols (hereinafter referred to as a DM-RS pattern 4). It may be learned from Table 2 that, relative locations of symbols in the DM-RS pattern 4 relative to a first sidelink transmission starting symbol are 1 and 5, respectively. Because the first sidelink transmission starting symbol is a symbol 6, the symbols in the DM-RS pattern 4 are located at a symbol 7 and a symbol 11. For location arrangement of the DM-RS pattern 4 in a slot, reference may be made to part (d) of FIG. 26.

When performing sidelink transmission starting from the first candidate transmission starting symbol, the first terminal device may select one DM-RS pattern from the DM-RS pattern 1 to the DM-RS pattern 3, and indicate the selected DM-RS pattern in the first-stage SCI. When the first terminal device performs sidelink transmission starting from the second candidate transmission starting symbol, a second DM-RS pattern corresponding to the candidate transmission start location includes only one DM-RS pattern, namely, the DM-RS pattern 4 mentioned above. Therefore, the first terminal device may select the DM-RS pattern. Because the second DM-RS pattern includes only one DM-RS pattern, the DM-RS pattern selected by the first terminal device may be indicated or not indicated in the first-stage SCI. For a terminal device serving as a receive end (hereinafter referred to as a second terminal device), when successfully detecting a PSCCH in PSCCH resources (namely, a symbol 1 and a symbol 2) corresponding to the first candidate transmission starting symbol, the second terminal device may determine that the first terminal device performs sidelink transmission starting from the first candidate transmission starting symbol, and determine, based on configuration information, that the first candidate transmission starting symbol corresponds to three available DM-RS patterns. Further, the second terminal device may determine a corresponding DM-RS pattern based on DM-RS pattern indication information in the first-stage SCI. When successfully detecting the PSCCH in PSCCH resources (namely, a symbol 7 and a symbol 8) corresponding to the second candidate transmission starting symbol, the second terminal device may determine that the first terminal device performs sidelink transmission starting from the second candidate transmission starting symbol, and may determine, based on the configuration information, that the candidate transmission start location corresponds to one available DM-RS pattern, namely, the DM-RS pattern 4 mentioned above.

In some implementations, if the first terminal device performs sidelink transmission starting from the first candidate transmission starting symbol, a quantity of information bits included in a DM-RS information field (which may be used to carry DM-RS pattern indication information) in the first-stage SCI is determined based on a quantity of DM-RS patterns included in the first DM-RS pattern and/or a quantity of DM-RS patterns included in the second DM-RS pattern.

For example, the quantity of information bits included in the DM-RS information field is $\left\lceil log_2 \left( N_{pattern} \right) \right\rceil$, where $N_{pattern}$ is determined according to $N_{pattern1}$ and/or $N_{pattern2}$, $N_{pattern1}$ denotes a total quantity of DM-RS patterns corresponding to a configured first candidate transmission start location, and $N_{pattern2}$ denotes a total quantity of DM-RS patterns corresponding to a configured first candidate transmission start location. For example, $N_{pattern} = N_{pattern1} + N_{pattern2}$; or $N_{pattern} = \max \left( N_{pattern1}, N_{pattern2} \right)$. Herein $\left\lceil log_2 \left( N_{pattern} \right) \right\rceil$ denotes performing a ceiling operation on $log_2(N_{pattern})$, and $\max \left( N_{pattern1}, N_{pattern2} \right)$ denotes a maximum value selected from $N_{pattern1}$ and $N_{pattern2}$.

In some implementations, if the first terminal device performs sidelink transmission starting from the second candidate transmission starting symbol, a quantity of information bits included in a DM-RS information field (which may be used to carry DM-RS pattern indication information) in the second-stage SCI is determined based on a quantity of DM-RS patterns included in the first DM-RS pattern and/or a quantity of DM-RS patterns included in the second DM-RS pattern.

For example, the quantity of information bits included in the DM-RS information field is $\left\lceil log_2 \left( N_{pattern} \right) \right\rceil$, where $N_{pattern}$ is determined according to $N_{pattern1}$ and/or $N_{pattern2}$, $N_{pattern1}$ denotes a total quantity of DM-RS patterns corresponding to a configured first candidate transmission start location, and $N_{pattern2}$ denotes a total quantity of DM-RS patterns corresponding to a configured first candidate transmission start location. For example, $N_{pattern} = N_{pattern1} + N_{pattern2}$; or $N_{pattern} = \max \left( N_{pattern1}, N_{pattern2} \right)$. Herein $\left\lceil log_2 \left( N_{pattern} \right) \right\rceil$ denotes performing a ceiling operation on $log_2(N_{pattern})$, and $\max \left( N_{pattern1}, N_{pattern2} \right)$ denotes a maximum value selected from $N_{pattern1}$ and $N_{pattern2}$.

The following provides a specific example.

First, it may be determined, based on configuration information, that a slot includes a first candidate transmission starting symbol and a second candidate transmission starting symbol, which are respectively corresponding to a symbol 0 and a symbol 6. For the first candidate transmission starting symbol 0, a quantity of symbols available for sidelink transmission in the slot is 13 (not including a last GP symbol in the slot), that is, all symbols (not including the last GP symbol) in the slot may be used for sidelink transmission. For the second candidate transmission starting symbol 6, a quantity of symbols available for sidelink transmission in the slot is 7 (not including a last GP symbol in the slot), that is, all symbols (not including the last GP symbol) starting from the symbol 6 in the slot may be used for sidelink transmission. There are two symbols occupied by a PSCCH in a resource pool. The resource pool configuration information may include first configuration information and second configuration information, which are respectively used to configure a first DM-RS pattern (corresponding to the first candidate transmission starting symbol 0) and a second DM-RS pattern (corresponding to the second candidate transmission starting symbol 6).

The first DM-RS pattern configured by the first configuration information may include, for example, three DM-RS patterns. The three DM-RS patterns respectively include two DM-RS symbols (hereinafter referred to as a DM-RS pattern 1), three DM-RS symbols (hereinafter referred to as a DM-RS pattern 2), and four DM-RS symbols (hereinafter referred to as a DM-RS pattern 3). It may be learned from Table 2 that, relative locations of symbols in the DM-RS pattern 1 relative to a first sidelink transmission starting symbol are 3 and 10, respectively. Because the first sidelink transmission starting symbol is a symbol 0, the symbols in the DM-RS pattern 1 are located at a symbol 3 and a symbol 10. Relative locations of symbols in the DM-RS pattern 2 relative to a first sidelink transmission starting symbol are 1, 6, and 11, respectively. Because the first sidelink transmission starting symbol is a symbol 0, the symbols in the DM-RS pattern 2 are located at a symbol 1, a symbol 6, and a symbol 11. Relative locations of symbols in the DM-RS pattern 3 relative to a first sidelink transmission starting symbol are 1, 4, 7, and 10, respectively. Because the first sidelink transmission starting symbol is a symbol 0, the symbols in the DM-RS pattern 3 are located at a symbol 1, a symbol 4, a symbol 7, and a symbol 10. For location arrangement of the DM-RS patterns 1 to 3 in a slot, reference may be made to parts (a) to (c) of FIG. 26.

The second DM-RS pattern configured by using the second configuration information may include, for example, one DM-RS pattern. The DM-RS pattern includes two DM-RS symbols (hereinafter referred to as a DM-RS pattern 4). It may be learned from Table 2 that, relative locations of symbols in the DM-RS pattern 4 relative to a first sidelink transmission starting symbol are 1 and 5, respectively. Because the first sidelink transmission starting symbol is a symbol 6, the symbols in the DM-RS pattern 4 are located at a symbol 7 and a symbol 11. For location arrangement of the DM-RS pattern 4 in a slot, reference may be made to part (d) of FIG. 26.

The first DM-RS pattern includes three DM-RS patterns, and the second DM-RS pattern includes one DM-RS pattern. Therefore, the first DM-RS pattern and the second DM-RS pattern altogether include four possible DM-RS patterns. The DM-RS information field in the first-stage SCI may include two bits, which respectively indicate the four possible DM-RS patterns. The first DM-RS pattern corresponds to a first value to a third value of the two bits, and the second DM-RS pattern corresponds to a fourth value of the two bits.

When the first terminal device performs sidelink transmission from the first candidate transmission starting symbol, the first terminal device may select one DM-RS pattern from the DM-RS pattern 1 to the DM-RS pattern 3, and indicate the selected DM-RS pattern in the first-stage SCI, that is, a value of the DM-RS information field in the first-stage SCI is set to one of the first value to the third value. When the first terminal device performs sidelink transmission starting from the second candidate transmission starting symbol, a second DM-RS pattern corresponding to the candidate transmission start location includes only one DM-RS pattern, namely, the DM-RS pattern 4 mentioned above. Therefore, the first terminal device may select the DM-RS pattern, and indicate the selected DM-RS pattern in the first-stage SCI, that is, a value of the DM-RS information field in the first-stage SCI is set to the fourth value. For a terminal device serving as a receive end (hereinafter referred to as a second terminal device), when successfully detecting a PSCCH in PSCCH resources (namely, a symbol 1 and a symbol 2) corresponding to the first candidate transmission starting symbol, the second terminal device may determine that the first terminal device performs sidelink transmission starting from the first candidate transmission starting symbol, and determine, based on configuration information, that the first candidate transmission starting symbol corresponds to three available DM-RS patterns. Further, the second terminal device may determine a corresponding DM-RS pattern based on DM-RS pattern indication information in the first-stage SCI. When successfully detecting the PSCCH in PSCCH resources (namely, a symbol 7 and a symbol 8) corresponding to the second candidate transmission starting symbol, the second terminal device may determine that the first terminal device performs sidelink transmission starting from the second candidate transmission starting symbol, and may determine, based on the configuration information, that the candidate transmission start location corresponds to one available DM-RS pattern, namely, the DM-RS pattern 4 mentioned above.

**Manner 2 of determining the second DM-RS pattern: based on the first DM-RS pattern**

In some implementations, the first DM-RS pattern may be acquired by the first terminal device from resource pool configuration information. For example, the resource pool configuration information may include third configuration information, and the third configuration information is used to configure the first DM-RS pattern.

In some implementations, the second DM-RS pattern is determined based on a first relative location. The first relative location may be determined based on a location of a DM-RS symbol in the first DM-RS pattern relative to a first candidate transmission starting symbol. For example, the first relative location may indicate a quantity of symbols between the DM-RS symbol in the first DM-RS pattern and the first candidate transmission starting symbol.

In some implementations, the second DM-RS pattern being determined based on the first relative location may include: a symbol index corresponding to the second DM-RS pattern is determined based on the first relative location and a second candidate transmission starting symbol. For example, the first DM-RS pattern includes two DM-RS symbols, symbol intervals between the two DM-RS symbols and the first candidate transmission starting symbol are m and n, respectively, and a symbol index of the second candidate transmission starting symbol is x. In this case, symbol indexes corresponding to the second DM-RS pattern may be x+m and x+n. If a symbol index in the foregoing symbol indexes is greater than or equal to a symbol index of a last symbol in one slot, the symbol index may be removed from the symbol indexes corresponding to the second DM-RS pattern.

In some implementations, an index of the second DM-RS pattern may be determined based on an index of the first DM-RS pattern. For example, the index of the second DM-RS pattern is the same as the index of the first DM-RS pattern.

In some implementations, only a DM-RS pattern (namely, the first DM-RS pattern) corresponding to the first candidate transmission starting symbol may be configured in the resource pool configuration information, and a DM-RS pattern (namely, the second DM-RS pattern) corresponding to the second candidate transmission starting symbol is not configured in the resource pool configuration information.

In some implementations, if the first terminal device performs sidelink transmission starting from the first candidate transmission starting symbol, first-stage SCI transmitted by the first terminal device is used to indicate an index associated with the first DM-RS pattern.

In some implementations, if the first terminal device performs sidelink transmission starting from the second candidate transmission starting symbol, first-stage SCI transmitted by the first terminal device is used to indicate an index associated with the first DM-RS pattern. In other words, regardless of whether the first terminal device performs sidelink transmission starting from the first candidate transmission starting symbol or the second candidate transmission starting symbol, the first-stage SCI may be used to indicate the index associated with the first DM-RS pattern.

In some implementations, if the first terminal device performs sidelink transmission starting from the first candidate transmission starting symbol, a quantity of information bits included in a DM-RS information field (which may be used to carry DM-RS pattern indication information) in first-stage SCI is determined based on a quantity of DM-RS patterns included in the first DM-RS pattern. For example, a quantity of information bits included in the DM-RS information field is $\lceil log_2(N_{pattern1}) \rceil$, where $N_{pattern1}$ denotes a total quantity of DM-RS patterns corresponding to a configured first candidate transmission start location, and $\lceil log_2(N_{pattern1}) \rceil$ denotes performing a ceiling operation on $log_2$ $(N_{pattern1})$.

In some implementations, if the first terminal device performs sidelink transmission starting from the second candidate transmission starting symbol, a quantity of information bits included in a DM-RS information field (which may be used to carry DM-RS pattern indication information) in first-stage SCI is determined based on a quantity of DM-RS patterns included in the first DM-RS pattern. For example, a quantity of information bits included in the DM-RS information field is $\lceil log_2(N_{pattern1}) \rceil$, where $N_{pattern1}$ denotes a total quantity of DM-RS patterns corresponding to a configured first candidate transmission start location, and $\lceil log_2(N_{pattern1}) \rceil$ denotes performing a ceiling operation on $log_2$ $(N_{pattern1})$.

The following provides a specific example.

First, it may be determined, based on configuration information, that a slot includes a first candidate transmission starting symbol and a second candidate transmission starting symbol, which respectively correspond to a symbol 0 and a symbol 6. For the first candidate transmission starting symbol 0, a quantity of symbols available for sidelink transmission in the slot is 13 (not including a last GP symbol in the slot), that is, all symbols (not including the last GP symbol) in the slot may be used for sidelink transmission. For the second candidate transmission starting symbol 6, a quantity of symbols available for sidelink transmission in the slot is 7 (not including a last GP symbol in the slot), that is, all symbols (not including the last GP symbol) starting from the symbol 6 in the slot may be used for sidelink transmission. There are two symbols occupied by a PSCCH in a resource pool. The resource pool configuration information includes only configuration information (namely, the third configuration information mentioned above) used to configure the first DM-RS pattern, and does not include configuration information used to configure a second DM-RS pattern.

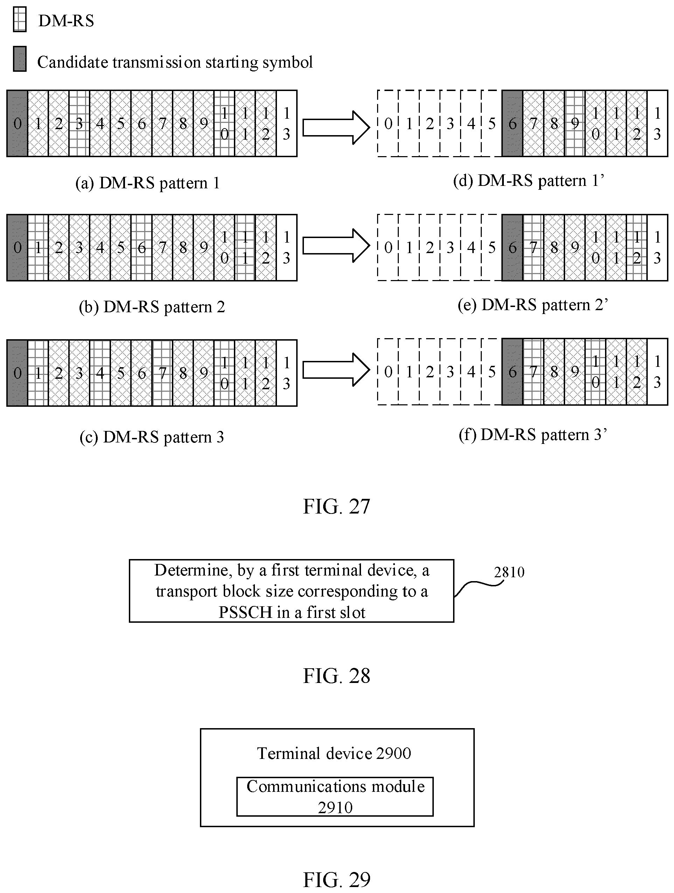

The first DM-RS pattern configured by the third configuration information may include, for example, three DM-RS patterns. The three DM-RS patterns respectively include two DM-RS symbols (hereinafter referred to as a DM-RS pattern 1), three DM-RS symbols (hereinafter referred to as a DM-RS pattern 2), and four DM-RS symbols (hereinafter referred to as a DM-RS pattern 3). It may be learned from Table 2 that, relative locations of symbols in the DM-RS pattern 1 relative to a first sidelink transmission starting symbol are 3 and 10, respectively. Because the first sidelink transmission starting symbol is a symbol 0, the symbols in the DM-RS pattern 1 are located at a symbol 3 and a symbol 10. Relative locations of symbols in the DM-RS pattern 2 relative to a first sidelink transmission starting symbol are 1, 6, and 11, respectively. Because the first sidelink transmission starting symbol is a symbol 0, the symbols in the DM-RS pattern 2 are located at a symbol 1, a symbol 6, and a symbol 11. Relative locations of symbols in the DM-RS pattern 3 relative to a first sidelink transmission starting symbol are 1, 4, 7, and 10, respectively. Because the first sidelink transmission starting symbol is a symbol 0, the symbols in the DM-RS pattern 3 are located at a symbol 1, a symbol 4, a symbol 7, and a symbol 10. For location arrangement of the DM-RS patterns 1 to 3 in a slot, reference may be made to parts (a) to (c) of FIG. 27.

When performing sidelink transmission starting from the first candidate transmission starting symbol, the first terminal device may select one DM-RS pattern from the DM-RS pattern 1 to the DM-RS pattern 3 that correspond to a first candidate transmission start location, and indicate the selected DM-RS pattern in the first-stage SCI. When performing sidelink transmission starting from the second candidate transmission starting symbol, the first terminal device may select one DM-RS pattern from the DM-RS pattern 1 to the DM-RS pattern 3, and determine, based on a relative location between a DM-RS symbol in the selected DM-RS pattern and the first sidelink transmission starting symbol, a location of a corresponding DM-RS symbol when transmission starts from the second candidate transmission starting symbol. For example, when the DM-RS pattern selected by the first terminal device is the DM-RS pattern 1, it may be learned from Table 2 that relative locations of the two DM-RS symbols in the DM-RS pattern 1 relative to the second candidate transmission starting symbol (namely, the symbol 6) are 3 and 10. Therefore, when determining to start transmission from the second candidate transmission starting symbol, the first terminal device may transmit the DM-RS symbols on a symbol 9 and a symbol 16. However, because the symbol 16 does not belong to a current slot, when transmission starts from the second candidate transmission starting symbol, the first terminal device transmits a DM-RS only on the symbol 9, such as the DM-RS pattern 1' shown in part (d) of FIG. 27. For another example, when a DM-RS pattern selected by the first terminal device is the DM-RS pattern 2, it may be learned from Table 2 that, relative locations of three DM-RS symbols in the DM-RS pattern 2 relative to the second candidate transmission starting symbol (namely, the symbol 6) are 1, 6, and 11. Therefore, when determining to start transmission from the second candidate transmission starting symbol, the first terminal device may transmit the DM-RS symbols on a symbol 7, a symbol 12, and a symbol 17. However, because the symbol 17 does not belong to a current slot, when transmission starts from the second candidate transmission starting symbol, the first terminal device transmits a DM-RS only on the symbol 7 and the symbol 12, such as the DM-RS pattern 2' shown in part (e) of FIG. 27. For another example, when a DM-RS pattern selected by the first terminal device is the DM-RS pattern 3, it may be learned from Table 2 that, relative locations of four DM-RS symbols in the DM-RS pattern 3 relative to the second candidate transmission starting symbol (namely, the symbol 6) are 1, 4, 7, and 10. Therefore, when determining to start transmission from the second candidate transmission starting symbol, the first terminal device may transmit the DM-RS symbols on a symbol 7, a symbol 10, a symbol 13, and a symbol 16. However, because the symbol 16 does not belong to a current slot, and the symbol 13 is a GP symbol with no data or signal being transmitted, when transmission starts from the second candidate transmission starting symbol, the first terminal device transmits a DM-RS only on the symbol 7 and the symbol 10, such as the DM-RS pattern 3' shown in part (f) of FIG. 27.

When sidelink transmission starts from the first candidate transmission starting symbol, a quantity of information bits included in a DM-RS information field in first-stage SCI is $\left\lceil log_2\left(N_{pattern1}\right)\right\rceil$, where $N_{pattern1}$ denotes a total quantity of DM-RS patterns corresponding to a configured first candidate transmission start location, and the corresponding DM-RS patterns are shown in DM-RS patterns 1 to 3 in FIG. 27. When sidelink transmission starts from the second candidate transmission starting symbol, the quantity of information bits included in the DM-RS information field in the first-stage SCI is also $\left\lceil log_2\left(N_{pattern1}\right)\right\rceil$, and corresponding DM-RS patterns are shown in DM-RS patterns 1' to 3' in FIG. 27.

The foregoing discusses an impact of introduction of a plurality of candidate transmission starting symbols on a signal/channel mapping mode, a configuration mode and/or an indication mode of a DM-RS pattern. The introduction of the plurality of candidate transmission starting symbols may also affect a manner of determining a TBS, which will be discussed below.

Regardless of from which candidate transmission starting symbol the first terminal device performs transmission, transport block sizes TBSs corresponding to a PSSCH should be the same; otherwise, detection fails to be performed on a receive end. It can be learned from the foregoing description in the section "Sidelink TBS" that a TBS is determined based on some parameters, and introduction of a plurality of candidate transmission starting symbols may affect some specific parameters. In this case, how a TBS should be determined is a problem to be solved. For example, a quantity of symbols corresponding to the first candidate transmission starting symbol and used for sidelink transmission is different from that corresponding to the second candidate transmission starting symbol and used for sidelink transmission. In this case, a manner of determining "a quantity of symbols used for sidelink transmission" is required to be determined, so as to ensure that a transport block size TBS corresponding to a PSSCH remains unchanged.

In view of the foregoing problem, the following describes embodiments of this application in detail with reference to FIG. 28.

Referring to FIG. 28, in step S2810, a first terminal device determines a TBS corresponding to a PSSCH in a first slot. The first information mentioned herein at least includes a first candidate transmission starting symbol and a second candidate transmission starting symbol that have different time domain locations. For descriptions of the first candidate transmission starting symbol and the second candidate transmission starting symbol, reference may be made to the foregoing description, and details are not described herein again.

The TBS may be determined based on a plurality of parameters. For example, the TBS may be determined based on one or more of a first parameter (indicating a quantity of sidelink symbols), a second parameter (indicating a quantity of REs), and a third parameter (indicating a quantity of PRBs).

The first parameter may also be referred to as a first symbol quantity, and may be denoted by $N_{symb}^{sh}$. In some implementations, the first parameter may be determined based on one or more of the following: pre-configuration information; network configuration information (namely, configuration information of a network device); indication information transmitted by a second terminal device; a quantity of symbols used for sidelink transmission and determined based on the first candidate transmission starting symbol; or a quantity of symbols that are used for sidelink transmission and determined based on the second candidate transmission starting symbol. The "symbols used for sidelink transmission" mentioned in embodiments of this application may be replaced with "symbols available for sidelink transmission".

In some implementations, the symbols that are used for sidelink transmission and determined based on the first candidate transmission starting symbol may not include one or more of the following: a last symbol for sidelink transmission in the first slot; the first candidate transmission starting symbol; or the second candidate transmission starting symbol. For example, symbols that are used for sidelink transmission and determined based on the first candidate transmission starting symbol do not include a last symbol for sidelink transmission in the first slot, and the last symbol may be used as a GP symbol. For another example, symbols that are used for sidelink transmission and determined based on the first candidate transmission starting symbol do not include the first candidate transmission starting symbol. The first candidate transmission starting symbol may be used as an AGC symbol, and the first candidate transmission starting symbol is generally used to carry duplicate data of data in another symbol. Therefore, a TBS may be determined without considering the symbol. For another example, symbols that are used for sidelink transmission and determined based on the first candidate transmission starting symbol do not include the second candidate transmission starting symbol. The second candidate transmission starting symbol may be used as an AGC symbol, and the second candidate transmission starting symbol is generally used to carry duplicate data of data in another symbol. Therefore, a TBS may be determined without considering the symbol.

In a specific example, the first parameter may meet: $N_{symb}^{sh} = sl - \ LengthSymbols - 2$, where *sl - LengthSymbols* denotes a quantity of symbols used for sidelink transmission in one slot, and the parameter may be determined based on a 1st candidate transmission starting symbol in one slot. Removing two symbols from the parameter may indicate that the first parameter does not include a last symbol in the slot or the first candidate transmission starting symbol.

In another specific example, the first parameter may meet: $N_{symb}^{sh} = sl - LengthSymbols - 3$, where *sl - LengthSymbols* denotes a quantity of symbols used for sidelink transmission in one slot, and the parameter may be determined based on a 1st candidate transmission starting symbol in the slot. Removing three symbols from the parameter may indicate that the first parameter does not include a last symbol in the slot, the first candidate transmission starting symbol, or the second candidate transmission starting symbol.

In some implementations, symbols that are used for sidelink transmission and determined based on the second candidate transmission starting symbol may not include one or more of the following: a last symbol used for sidelink transmission in the first slot; or the second candidate transmission starting symbol.

In some implementations, the indication information (which is used to determine the first parameter) transmitted by the second terminal device mentioned above may be referred to as first indication information. The first indication information may include one or more bits. If a value of the one or more bits is a first value, it indicates that the first parameter is determined based on a first quantity (that is, a quantity of symbols that are used for sidelink transmission and determined based on the first candidate transmission starting symbol, which is referred to as the first quantity hereinafter). If a value of the one or more bits is a second value, it indicates that the first parameter is determined based on a second quantity (that is, a quantity of symbols that are used for sidelink transmission and determined based on the second candidate transmission starting symbol, which is referred to as the second quantity hereinafter).

In some implementations, the first indication information may include one or more bits. If a value of the one or more bits is the first value, it indicates that the first parameter is determined based on an average value of the first quantity and the second quantity. If a value of the one or more bits is the second value, it indicates that the first parameter is determined based on the first quantity.

In some implementations, the first indication information may include one or more bits. If a value of the one or more bits is the first value, it indicates that the first parameter is determined based on an average value of the first quantity and the second quantity. If a value of the one or more bits is the second value, it indicates that the first parameter is determined based on the second quantity.

In some implementations, the first indication information may include one or more bits. If a value of the one or more bits is the first value, it indicates that the first parameter is determined based on an average value of the first quantity and the second quantity. If a value of the one or more bits is the second value, it indicates that the first parameter is determined based on higher layer configuration information (such as RRC signalling).

In some implementations, the first terminal device may acquire first mapping relationship information. The mapping relationship information may be used to indicate a mapping relationship between an index and a symbol quantity. The first indication information may indicate a first index value recorded in the first mapping relationship information, and a value of the first parameter may be determined based on the first index value and the first mapping relationship information.

In some implementations, the first indication information may be carried by using SCI (such as first-stage SCI or second-stage SCI), a medium access control control element (medium access control control element, MAC CE), or PC5-RRC.

In some implementations, the value of the first parameter may be equal to the first quantity.

In some implementations, a value of the first parameter may be equal to the second quantity.

In some implementations, the value of the first parameter may be equal to a maximum value, a minimum value, or an average value of the first quantity and the second quantity.

In some implementations, if a symbol index corresponding to the second candidate transmission starting symbol is greater than or equal to a first value or a first threshold, a value of the first parameter may be equal to the second quantity.

In some implementations, if a symbol index corresponding to the second candidate transmission starting symbol is less than the first value or the first threshold, the value of the first parameter may be equal to the first quantity.

In some implementations, if a symbol index corresponding to the second candidate transmission starting symbol is less than or equal to a second value or a second threshold, the value of the first parameter may be equal to the second quantity.

In some implementations, if a symbol index corresponding to the second candidate transmission starting symbol is greater than the second value or the second threshold, the value of the first parameter may be equal to the first quantity.

In some implementations, if the second quantity is greater than or equal to a third value or a third threshold, the value of the first parameter may be equal to the second quantity.

In some implementations, if the second quantity is less than the third value or the third threshold, the value of the first parameter may be equal to the first quantity.

In some implementations, if the second quantity is less than or equal to a fourth value or a fourth threshold, the value of the first parameter may be equal to the second quantity.

In some implementations, if the second quantity is greater than the fourth value or the fourth threshold, the value of the first parameter may be equal to the first quantity.

In some implementations, one or more of the following is determined based on pre-configuration information or network configuration information: the first value, the first threshold, the second value, the second threshold, the third value, the third threshold, the fourth value, or the fourth threshold.

In some implementations, the first parameter may be determined based on pre-configuration information or configuration information of a network device. For example, resource pool configuration information may include first information that may be used to determine the first parameter. The first terminal device may determine the value of the first parameter based on the first information. For example, the first information indicates a fifth value, and the value of the first parameter is equal to the fifth value. For another example, the first information indicates a sixth value, and the value of the first parameter is determined based on the sixth value and the first quantity, or the value of the first parameter is determined based on the sixth value and the second quantity. For example, the value of the first parameter is denoted as $V_1$, then

$$V_1 = \lceil K_6 \cdot N_1 \rceil \text{, or } V_1 = \lfloor K_6 \cdot N_1 \rfloor \text{, or } V_1 = \lceil K_6 \cdot N_2 \rceil \text{, or } V_1 = \lfloor K_6 \cdot N_2 \rfloor \text{, where } K_6 \text{ denotes the sixth}$$

value, $N_1$ denotes the first quantity, $N_2$ denotes the second quantity, $\lceil \ \rceil$ denotes a ceiling operation, and $\lfloor \ \rfloor$ denotes a floor operation.

In some implementations, the first terminal device may determine a first parameter, and then determine a TBS based on the first parameter. Then, the first terminal device may transmit second indication information to a second terminal device, and the second indication information may be used to determine the first parameter. After acquiring the second indication information transmitted by the first terminal device, the second terminal device may determine the first parameter based on the second indication information. Optionally, the second indication information may be carried in first-stage SCI, second-stage SCI, or a MAC CE. Optionally, the second indication information is carried in PC5-RRC.

The second parameter mentioned above may be denoted by $N_{RE}^{DMRS}$. In some embodiments, the second parameter may be determined based on a quantity of REs of a DM-RS or a reference quantity of REs of a DM-RS.

In some implementations, the second parameter may be determined based on one or more of the following: pre-configuration information; configuration information of a network device; indication information transmitted by the second terminal device; a quantity of REs determined based on a first DM-RS pattern; or a quantity of REs determined based on a second DM-RS pattern. The first DM-RS pattern corresponds to the first candidate transmission starting symbol, and the second DM-RS pattern corresponds to the second candidate transmission starting symbol.

In some implementations, the second parameter may be determined based on "a quantity of REs determined based on the first DM-RS pattern". For example, a value of the second parameter may be equal to "a quantity of REs determined based on the first DM-RS pattern". In an example, it is assumed that a first candidate transmission starting symbol and a second candidate transmission starting symbol are configured in a slot. A first DM-RS pattern corresponding to the first candidate transmission starting symbol includes two DM-RS symbols, three DM-RS symbols, and four DM-RS symbols. A second DM-RS pattern corresponding to the second candidate transmission starting symbol includes two DM-RS symbols. The second parameter may be determined based on an average quantity of DM-RS REs of the first DM-RS pattern. It may be learned from the last row in Table 1 that, the average quantity of DM-RS REs of the first DM-RS pattern is 18, and thus a value of the second parameter may also be 18.

In some implementations, the second parameter may be determined based on "a quantity of REs determined based on the second DM-RS pattern". For example, a value of the second parameter may be equal to "a quantity of REs determined based on the second DM-RS pattern". In an example, it is assumed that a first candidate transmission starting symbol and a second candidate transmission starting symbol are configured in a slot. A first DM-RS pattern corresponding to the first candidate transmission starting symbol includes two DM-RS symbols, three DM-RS symbols, and four DM-RS symbols. A second DM-RS pattern corresponding to the second candidate transmission starting symbol includes two DM-RS symbols. The second parameter may be determined based on an average quantity of DM-RS REs of the second DM-RS pattern. It may be learned from the first row in Table 1 that, the average quantity of DM-RS REs of the second DM-RS pattern is 12, and thus a value of the second parameter may also be 12.

In some implementations, the second parameter may be determined based on a maximum value, a minimum value, or an average value of a third quantity (namely, "a quantity of REs determined based on the first DM-RS pattern" mentioned above) and a fourth quantity (namely, "a quantity of REs determined based on the second DM-RS pattern" mentioned above). For example, a value of the second parameter may be equal to the maximum value, the minimum value, or the average value of the third quantity and the fourth quantity.

For example, the second parameter may meet: $N_{RE}^{DMRS} = \min\left(N_{RE,start1}^{DMRS}, N_{RE,start2}^{DMRS}\right)$, where $N_{RE}^{DMRS}$ denotes the second parameter, $N_{RE,start1}^{DMRS}$ denotes the third quantity, $N_{RE,start2}^{DMRS}$ denotes the fourth quantity, and min() denotes calculating a minimum value.

For another example, the second parameter may meet: $N_{RE}^{DMRS} = \max\left(N_{RE,start1}^{DMRS}, N_{RE,start2}^{DMRS}\right)$, where $N_{RE}^{DMRS}$ denotes the second parameter, $N_{RE,start1}^{DMRS}$ denotes the third quantity, $N_{RE,start2}^{DMRS}$ denotes the fourth quantity, and max() denotes calculating a maximum value.

For another example, the second parameter may meet: $N_{RE}^{DMRS} = \left(N_{RE,start1}^{DMRS} + N_{RE,start2}^{DMRS}\right)/2$, where $N_{RE}^{DMRS}$ denotes the second parameter, $N_{RE,start1}^{DMRS}$ denotes the third quantity, and $N_{RE,start2}^{DMRS}$ denotes the fourth quantity.

In an example, it is assumed that a first candidate transmission starting symbol and a second candidate transmission starting symbol are configured in a slot. A first DM-RS pattern corresponding to the first candidate transmission starting symbol includes two DM-RS symbols, three DM-RS symbols, and four DM-RS symbols. A second DM-RS pattern corresponding to the second candidate transmission starting symbol includes two DM-RS symbols. The second parameter may be determined based on an average quantity of DM-RS REs of the first DM-RS pattern and an average quantity of DM-RS REs of the second DM-RS pattern. It may be learned from the last row in Table 1 that, the average quantity of DM-RS REs of the first DM-RS pattern is 18. It may be learned from the first row in Table 1 that, an average quantity of DM-RS REs of the second DM-RS pattern is 12. The value of the second parameter may be equal to an average value of the two, namely, 15.

In some implementations, the second parameter may be determined based on pre-configuration information or configuration information of a network device. For example, resource pool configuration information includes second information used to determine the value of the second parameter. When determining a TBS, the first terminal device may determine the value of the second parameter based on the second information.

In some implementations, the second parameter may be determined based on indication information transmitted by a second terminal device. The indication information may be referred to as third indication information. The third indication information may include one or more bits. If a value of the one or more bits is a first value, it indicates that the second parameter is determined based on the third quantity. If a value of the one or more bits is a second value, it indicates that the first parameter is determined based on the fourth quantity.

In some implementations, the third indication information may include one or more bits. If a value of the one or more bits is the first value, it indicates that the second parameter is determined based on an average value of the third quantity and the fourth quantity. If a value of the one or more bits is the second value, it indicates that the second parameter is determined based on the third quantity.

In some implementations, the third indication information may include one or more bits. If a value of the one or more bits is the first value, it indicates that the second parameter is determined based on an average value of the third quantity and the fourth quantity. If a value of the one or more bits is a second value, it indicates that the second parameter is determined based on the fourth quantity.

In some implementations, the third indication information may include one or more bits. If a value of the one or more bits is the first value, it indicates that the second parameter is determined based on an average value of the third quantity and the fourth quantity. If a value of the one or more bits is the second value, it indicates that the second parameter is determined based on higher layer configuration information (such as RRC signalling).

In some implementations, the first terminal device may acquire first mapping relationship information. The mapping relationship information may be used to indicate a mapping relationship between an index and a symbol quantity. The third indication information may indicate a first index value recorded in the first mapping relationship information, and a value of the second parameter may be determined based on the first index value and the first mapping relationship information.

In some implementations, the third indication information may be carried by using SCI (such as first-stage SCI or second-stage SCI), a MAC CE, or PC5-RRC.

As mentioned above, a manner of determining the second parameter may be related to a first DM-RS pattern (a DM-RS pattern corresponding to the first candidate transmission starting symbol) and a second DM-RS pattern (a DM-RS pattern corresponding to the second candidate transmission starting symbol). For example, the first DM-RS pattern and the second DM-RS pattern may be configured by using different configuration information. Alternatively, the second DM-RS pattern may be determined based on the first DM-RS pattern. For a configuration and/or indication manner of the first DM-RS pattern and the second DM-RS pattern, reference may be made to the foregoing description. Details are not described herein again.

The third parameter mentioned above may be denoted by $n_{PRB}$. In some implementations, the third parameter may be determined based on a reference quantity of PRBs. The reference quantity of PRBs may be determined based on a quantity of PRBs corresponding to one sub-channel, or may be determined based on a quantity of PRBs corresponding to one interlace.

In some implementations, the third parameter may be determined based on one or more of the following information: sub-channel information; interlace information; pre-configuration information; or network configuration information.

In some implementations, the sub-channel information may include one or more of the following: a sub-channel size; an average value of a quantity of PRBs included in a sub-channel; a maximum value of a quantity of PRBs included in a sub-channel; a minimum value of a quantity of PRBs included in a sub-channel; a quantity of sub-channels corresponding to a frequency domain resource of the PSSCH; or a quantity of interlaces included in a sub-channel.

In some implementations, the interlace information may include: an average value of a quantity of PRBs included in an interlace; a maximum value of a quantity of PRBs included in an interlace; a minimum value of a quantity of PRBs included in an interlace; or a quantity of interlaces corresponding to a frequency domain resource of a PSSCH.

In some implementations, the third parameter may be determined based on a quantity of PRBs corresponding to a frequency domain resource of the PSSCH. For example, the third parameter may be equal to the quantity of PRBs corresponding to the frequency domain resource of the PSSCH.

In some implementations, the third parameter may be determined based on a sub-channel size (sub-channel size). For example, the third parameter may meet: $n_{PRB} = N_{sub-channel} \times N_{sub-channel}^{PRB}$ , where $N_{sub-chanel}^{PRB}$ denotes the sub-channel size, that is, a quantity of PRBs that are included in one sub-channel and determined based on configuration information; and $N_{sub\text{-}chanel}$ denotes a quantity of sub-channels, and the parameter is determined based on a quantity of sub-channels corresponding to the frequency domain resource of the PSSCH.

In some implementations, the third parameter is determined based on a quantity of PRBs or an average quantity of PRBs included in an interlace. The interlace may indicate an interlace in one resource block set (RB set); or the interlace may indicate an interlace in a plurality of resource block sets.

In some implementations, the third parameter may be determined based on the quantity of PRBs included in the interlace. For example, the third parameter may meet: $n_{PRB} \;=\; N_{sub-chanel} \times N_{sub-chanel}^{interlace} \times N_{interlace}^{PRB}$ , where $N_{sub-chanel}^{interlace}$ denotes a quantity of interlaces included in a sub-channel, and the parameter is determined based on pre-configuration information or network configuration information. Herein $N_{interlace}^{PRB}$ denotes a quantity of PRBs included in one interlace. The parameter may be determined based on a maximum value, a minimum value, or an average value of the quantity of PRBs included in the interlace, or the parameter is determined based on pre-configuration information or network configuration information. Herein $N_{sub\text{-}chanel}$ denotes a quantity of sub-channels, and the parameter is determined based on a quantity of sub-channels corresponding to the frequency domain resource of the PSSCH.

In some implementations, the third parameter is determined based on pre-configuration information or network configuration information. For example, resource pool configuration information may include third information used to determine a value of the third parameter. For example, the third information included in the resource pool configuration information is used to indicate a quantity of PRBs corresponding to one sub-channel or one interlace, that is, the quantity of PRBs corresponding to one sub-channel or one interlace may correspond to a reference quantity of PRBs. The value of the third parameter may be determined based on the reference quantity of PRBs.

In addition to the first parameter, the second parameter, and the third parameter mentioned above, the TBS corresponding to the PSSCH may alternatively be determined based on another parameter. The following describes the another parameter that may be used to determine the TBS.

In some implementations, the TBS may be determined based on a fourth parameter. The fourth parameter may be denoted by $N_{RE}^{SCI,1}$. The fourth parameter may be determined based on a quantity of REs occupied by first-stage SCI. Further, in some implementations, the REs occupied by the first-stage SCI may include an RE occupied by a DM-RS of a PSCCH.

In some implementations, the TBS may be determined based on a fifth parameter. The fifth parameter may be denoted by $N_{RE}^{SCI,2}$. The fifth parameter may be determined based on a quantity of REs occupied by second-stage SCI. It should be noted that, when data in the second candidate transmission starting symbol is duplicate data of data in another symbol (or referred to as replication of data on another symbol), and data in the another symbol includes second-stage SCI, the fifth parameter may not include a quantity of REs occupied by the second-stage SCI in the second candidate transmission starting symbol. For example, in part (b) of FIG. 24, during calculation of the quantity of REs occupied by the second-stage SCI, a quantity of REs used to map the second-stage SCI in a symbol 1 to a symbol 3, and a symbol 5 and a symbol 6 may be counted, but a quantity of REs used to map the second-stage SCI in a symbol 4 may not be counted, because data in the symbol 4 is duplicate data of data in the symbol 5.

In some implementations, the TBS may be determined based on a sixth parameter. The sixth parameter may be denoted by $N_{RE}'$. The sixth parameter may be determined based on one or more of the following: the first parameter (refer to the foregoing description), the second parameter (refer to the foregoing description), a seventh parameter, an eighth parameter, or a ninth parameter.

The sixth parameter is determined based on the first parameter and/or the second parameter. It may be understood that the sixth parameter is first determined based on the first parameter and/or the second parameter, and then the TBS is determined based on the sixth parameter.

The seventh parameter may be denoted by $N_{sc}^{RB}$. The seventh parameter may refer to a quantity of subcarriers in one PRB.

The eighth parameter may be denoted by $N_{symb}^{PSFCH}$. The eighth parameter may indicate a reference value of a quantity of symbols occupied by a PSFCH, and a specific value is indicated by a "PSFCH overhead indication (PSFCH overhead indication)" field in first-stage SCI. A value of the eighth parameter may be 0 or 3.

The ninth parameter may be denoted by $N_{oh}^{PRB}$. A value of the ninth parameter may be determined or configured by using an RRC layer parameter. For example, the value of the ninth parameter may be determined based on the parameter sl-X-Overhead. The parameter sl-X-Overhead may be used to indicate overheads of a PT-RS and a CSI-RS, or a reference value of a quantity of REs occupied by a PT-RS and a CSI-RS.

An example of a more specific manner of determining a TBS is given below.

The first terminal device may determine a TBS based on $N_{RE}$, where $N_{RE}$ may denote a reference value of a quantity of REs, and $N_{RE}$ may be determined based on one or more of $N'_{RE}$, $n_{PRB}$, $N_{RE}^{SCI,1}$, or $N_{RE}^{SCI,2}$. Herein $N'_{RE}$ corresponds to the sixth parameter mentioned above, $n_{PRB}$ corresponds to the third parameter mentioned above, $N_{RE}^{SCI,1}$ corresponds to the fourth parameter mentioned above, and $N_{RE}^{SCI,2}$ corresponds to the fifth parameter mentioned above. For meanings and determining manners of these parameters, reference may be made to the foregoing description. Details are not described herein again.

For example, $N_{RE}$ may meet: $N_{RE} = N'_{RE} \cdot n_{PRB} - N_{RE}^{SCI,1} - N_{RE}^{SCI,2}$.

Further, $N'_{RE}$ may meet: $N'_{RE} = N_{sc}^{RB}\left(N_{symb}^{sh} - N_{symb}^{PSFCH}\right) - N_{oh}^{PRB} - N_{RE}^{DMRS}$, where $N_{sc}^{RB}$ corresponds to the seventh parameter mentioned above, $N_{symb}^{sh}$ corresponds to the first parameter mentioned above, $N_{symb}^{PSFCH}$ corresponds to the eighth parameter mentioned above, $N_{oh}^{PRB}$ corresponds to the ninth parameter mentioned above, and $N_{RE}^{DMRS}$ corresponds to the second parameter mentioned above. For meanings and determining manners of these parameters, reference may be made to the foregoing description. Details are not described herein again.

It should be noted that the symbols mentioned above may refer to a time domain symbol or a sidelink symbol, for example, may refer to an OFDM symbol.

The method embodiments of this application are described above in detail with reference to FIG. 1 to FIG. 28. Apparatus embodiments of this application are described below in detail with reference to FIG. 29 to FIG. 32. It should be understood that the description of the method embodiments corresponds to the description of the apparatus embodiments, and therefore, for a part that is not described in detail, reference may be made to the foregoing method embodiments.

FIG. 29 is a schematic structural diagram of a terminal device according to an embodiment of this application. A terminal device 2900 shown in FIG. 29 may be the first terminal device described above.

The terminal device 2900 may include a communications module 2910. The communications module 2910 may be configured to perform sidelink transmission in a first slot. The first slot at least includes a first candidate transmission starting symbol and a second candidate transmission starting symbol, and a time domain location of the second candidate transmission starting symbol is after a time domain location of the first candidate transmission starting symbol. The second candidate transmission starting symbol is not used to map a first signal/channel corresponding to transmission that is based on the first candidate transmission starting symbol.

In some implementations, the first signal/channel includes one or more of the following: a first PSSCH; a first PSCCH; a first CSI-RS; a DM-RS of a first PSSCH; or second-stage SCI.

In some implementations, in a case that a DM-RS pattern selected by the first terminal device includes a first DM-RS symbol that overlaps the time domain location of the second candidate transmission starting symbol, the first DM-RS symbol is mapped to a previous symbol or a subsequent symbol of the second candidate transmission starting symbol.

In some implementations, the first terminal device does not expect to select a DM-RS pattern including a DM-RS symbol that overlaps the time domain location of the second candidate transmission starting symbol; or the first terminal device does not expect to receive a DM-RS pattern including a DM-RS symbol that overlaps the time domain location of the second candidate transmission starting symbol.

In some implementations, the terminal device 2900 further includes: a first acquiring module, configured to acquire first configuration information, where the first configuration information is used to configure a DM-RS pattern available in a resource pool, and any DM-RS pattern configured by using the first configuration information does not include a symbol that overlaps the time domain location of the second candidate transmission starting symbol.

In some implementations, a symbol index corresponding to the second candidate transmission starting symbol is greater than a symbol index corresponding to a last symbol in symbols used to map the first PSCCH.

In some implementations, a symbol index corresponding to the first candidate transmission starting symbol is $I_1$, a symbol index corresponding to the second candidate transmission starting symbol is $I_2$, and a quantity of symbols corresponding to the first PSCCH is A, where $I_2 > I_1 + A$ or $I_2 \geq I_1 + A + 1$.

In some implementations, in a case that a symbol used to map the second-stage SCI overlaps the time domain location of the second candidate transmission starting symbol, the second-stage SCI is mapped from a subsequent symbol of the second candidate transmission starting symbol.

In some implementations, in a case that a symbol used to map the first PSSCH overlaps the time domain location of the second candidate transmission starting symbol, the first PSSCH is mapped from a subsequent symbol of the second candidate transmission starting symbol.

In some implementations, the terminal device 2900 further includes: a second acquiring module, configured to generate or acquire second configuration information, where the second configuration information is used to configure a symbol of the first CSI-RS, and the symbol of the first CSI-RS does not include a symbol that overlaps the time domain location of the second candidate transmission starting symbol.

In some implementations, in a case that a symbol used to map the first CSI-RS overlaps the time domain location of the second candidate transmission starting symbol, a symbol of the first CSI-RS is mapped to a previous symbol or a subsequent symbol of the second candidate transmission starting symbol.

In some implementations, the second candidate transmission starting symbol is used to carry duplicate data of data in a previous symbol or a subsequent symbol of the second candidate transmission starting symbol.

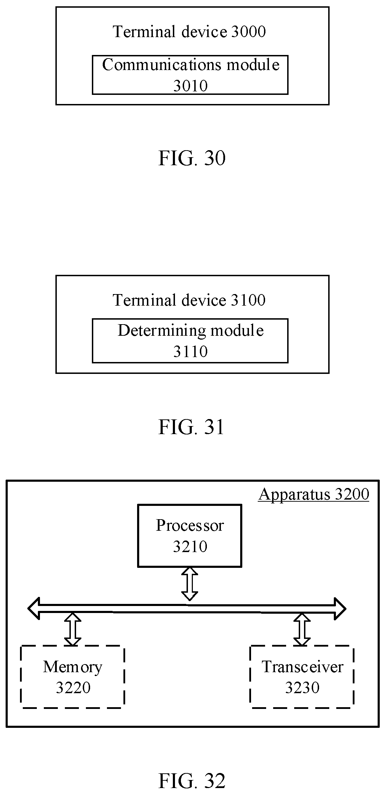

FIG. 30 is a schematic structural diagram of a terminal device according to another embodiment of this application. A terminal device 3000 shown in FIG. 30 may be the first terminal device described above.

The terminal device 3000 may include a communications module 3010. The communications module 3010 may be configured to perform sidelink transmission in a first slot. The first slot at least includes a first candidate transmission starting symbol and a second candidate transmission starting symbol, and a time domain location of the second candidate transmission starting symbol is after a time domain location of the first candidate transmission starting symbol. The first candidate transmission starting symbol corresponds to a first DM-RS pattern, the second candidate transmission starting symbol corresponds to a second DM-RS pattern, and the second DM-RS pattern is determined based on one or more of the following: resource pool configuration information; or the first DM-RS pattern.

In some implementations, the second DM-RS pattern being determined based on the resource pool configuration information includes that: the resource pool configuration information includes first configuration information and second configuration information, the first configuration information is used to configure the first DM-RS pattern, and the second configuration information is used to configure the second DM-RS pattern.

In some implementations, if the first terminal device performs sidelink transmission starting from the first candidate transmission starting symbol, first-stage SCI transmitted by the first terminal device is used to indicate index information associated with the first DM-RS pattern; or in a case that the first terminal device performs sidelink transmission starting from the second candidate transmission starting symbol, first-stage SCI transmitted by the first terminal device is used to indicate index information associated with the second DM-RS pattern.

In some implementations, the second DM-RS pattern being determined based on the first DM-RS pattern includes: the second DM-RS pattern is determined based on a first relative location, and the first relative location is determined based on a relative location between a DM-RS symbol in the first DM-RS pattern and the first candidate transmission starting symbol.

In some implementations, a symbol index corresponding to the second DM-RS pattern is determined based on the first relative location and the second candidate transmission starting symbol.

In some implementations, an index of the second DM-RS pattern is determined based on an index of the first DM-RS pattern; or an index of the second DM-RS pattern is the same as an index of the first DM-RS pattern.

In some implementations, the terminal device 3000 further includes: a first acquiring module, configured to acquire resource pool configuration information, where the resource pool configuration information includes third configuration information, and the third configuration information is used to configure the first DM-RS pattern.

In some implementations, if the first terminal device performs sidelink transmission starting from the first candidate transmission starting symbol, first-stage SCI transmitted by the first terminal device is used to indicate an index associated with the first DM-RS pattern; or in a case that the first terminal device performs sidelink transmission starting from the second candidate transmission starting symbol, first-stage SCI transmitted by the first terminal device is used to indicate an index associated with the first DM-RS pattern.

FIG. 31 is a schematic structural diagram of a terminal device according to an embodiment of this application. A terminal device 3100 shown in FIG. 31 may be the first terminal device described above.

The terminal device 3100 may include a determining module 3110. The determining module 3110 may be configured to determine a transport block size corresponding to a PSSCH in a first slot based on one or more of the following parameters: a first parameter, indicating a quantity of sidelink symbols; a second parameter, indicating a quantity of REs; or a third parameter, indicating a quantity of PRBs. The first slot at least includes a first candidate transmission starting symbol and a second candidate transmission starting symbol that have different time domain locations.

In some implementations, the first parameter is determined based on one or more of the following: a quantity of symbols that are used for sidelink transmission and determined based on the first candidate transmission starting symbol; or a quantity of symbols that are used for sidelink transmission and determined based on the second candidate transmission starting symbol.

In some implementations, the symbols that are used for sidelink transmission and determined based on the first candidate transmission starting symbol do not include one or more of the following: a last symbol for sidelink transmission in the first slot; or the first candidate transmission starting symbol; or the second candidate transmission starting symbol.

In some implementations, the symbols that are used for sidelink transmission and determined based on the second candidate transmission starting symbol do not include one or more of the following: a last symbol for sidelink transmission in the first slot; or the second candidate transmission starting symbol.

In some implementations, the quantity of symbols that are used for sidelink transmission and determined based on the first candidate transmission starting symbol is a first quantity, the quantity of symbols that are used for sidelink transmission and determined based on the second candidate transmission starting symbol is a second quantity, and the first parameter is determined based on one or more of the following: a value of the first parameter is equal to the first quantity; a value of the first parameter is equal to the second quantity; a value of the first parameter is equal to a maximum value, a minimum value, or an average value of the first quantity and the second quantity; in a case that a symbol index corresponding to the second candidate transmission starting symbol is greater than or equal to a first threshold, a value of the first parameter is equal to the second quantity; in a case that a symbol index corresponding to the second candidate transmission starting symbol is less than the first threshold, a value of the first parameter is equal to the first quantity; in a case that a symbol index corresponding to the second candidate transmission starting symbol is less than or equal to a second threshold, a value of the first parameter is equal to the second quantity; in a case that a symbol index corresponding to the second candidate transmission starting symbol is greater than the second threshold, a value of the first parameter is equal to the first quantity; in a case that the second quantity is greater than or equal to a third threshold, a value of the first parameter is equal to the second quantity; in a case that the second quantity is less than the third threshold, a value of the first parameter is equal to the first quantity; in a case that the second quantity is less than or equal to a fourth threshold, a value of the first parameter is equal to the second quantity; or in a case that the second quantity is greater than the fourth threshold, a value of the first parameter is equal to the first quantity.

In some implementations, the second parameter is determined based on one or more of the following: a quantity of REs determined based on a first DM-RS pattern; or a quantity of REs determined based on a second DM-RS pattern. The first DM-RS pattern corresponds to the first candidate transmission starting symbol, and the second DM-RS pattern corresponds to the second candidate transmission starting symbol.

In some implementations, the terminal device 3100 further includes a first acquiring module, configured to acquire first configuration information and second configuration information, where the first configuration information is used to configure the first DM-RS pattern, and the second configuration information is used to configure the second DM-RS pattern.

In some implementations, the terminal device 3100 further includes a second acquiring module, configured to acquire third configuration information, where the third configuration information is used to configure the first DM-RS pattern, and the second DM-RS pattern is determined based on the first DM-RS pattern.

In some implementations, the second DM-RS pattern being determined based on the first DM-RS pattern includes: the second DM-RS pattern is determined based on a first relative location, and the first relative location is determined based on a relative location between a DM-RS symbol in the first DM-RS pattern and the first candidate transmission starting symbol.

In some implementations, a symbol index corresponding to the second DM-RS pattern is determined based on the first relative location and the second candidate transmission starting symbol.

In some implementations, the second parameter is determined based on a maximum value, a minimum value, or an average value of a third quantity and a fourth quantity, the third quantity is a quantity of REs determined based on the first DM-RS pattern, and the fourth quantity is a quantity of REs determined based on the second DM-RS pattern.

In some implementations, at least one of the first parameter or the second parameter is determined based on pre-configuration information or configuration information of a network device.

In some implementations, at least one of the first parameter or the second parameter is determined based on indication information transmitted by a second terminal device.

In some implementations, the indication information is carried by using SCI, a MAC CE, or PC5-RRC.

In some implementations, the third parameter is determined based on one or more of the following information: sub-channel information; interlace information; pre-configuration information; or network configuration information.

In some implementations, the sub-channel information includes one or more of the following: a sub-channel size; an average value of a quantity of PRBs included in a sub-channel; a maximum value of a quantity of PRBs included in a sub-channel; a minimum value of a quantity of PRBs included in a sub-channel; a quantity of sub-channels corresponding to a frequency domain resource of the PSSCH; or a quantity of interlaces included in a sub-channel.

In some implementations, the interlace information includes an average value of a quantity of PRBs included in an interlace; a maximum value of a quantity of PRBs included in an interlace; a minimum value of a quantity of PRBs included in an interlace; or a quantity of interlaces corresponding to a frequency domain resource of the PSSCH.

FIG. 32 is a schematic structural diagram of an apparatus according to an embodiment of this application. Dashed lines in FIG. 32 indicate that a unit or module is optional. The apparatus 3200 may be configured to implement the methods described in the foregoing method embodiments. The apparatus 3200 may be a chip or a terminal device.

The apparatus 3200 may include one or more processors 3210. The processor 3210 may support the apparatus 3200 in implementing the methods described in the foregoing method embodiments. The processor 3210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3200 may further include one or more memories 3220. The memory 3220 stores a program, and the program may be executed by the processor 3210, to cause the processor 3210 to execute the methods described in the foregoing method embodiments. The memory 3220 may be separate from the processor 3210 or may be integrated into the processor 3210.

The apparatus 3200 may further include a transceiver 3230. The processor 3210 may communicate with another device or chip by using the transceiver 3230. For example, the processor 3210 may transmit data to and receive data from another device or chip by using the transceiver 3230.

An embodiment of this application further provides a computer-readable storage medium for storing a program. The computer-readable storage medium may be applied to the terminal device provided in embodiments of this application, and the program causes a computer to perform the methods performed by the terminal device in various embodiments of this application.

An embodiment of this application further provides a computer program product. The computer program product includes a program. The computer program product may be applied to the terminal device provided in embodiments of this application, and the program causes a computer to perform the methods performed by the terminal device in various embodiments of this application.

An embodiment of this application further provides a computer program. The computer program may be applied to the terminal device provided in embodiments of this application, and the computer program causes a computer to perform the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink transmission method, comprising:

    performing, by a first terminal device, sidelink transmission in a first slot,
    wherein the first slot at least comprises a first candidate transmission starting symbol and a second candidate transmission starting symbol, and a time domain location of the second candidate transmission starting symbol is after a time domain location of the first candidate transmission starting symbol; and
    the second candidate transmission starting symbol is not used to map a first signal/channel corresponding to transmission that is based on the first candidate transmission starting symbol.

2. The method according to claim 1, wherein the first signal/channel comprises one or more of following:

    a first physical sidelink shared channel PSSCH;
    a first physical sidelink control channel PSCCH;
    a first channel state information reference signal CSI-RS;
    a demodulation reference signal DM-RS of the first PSSCH; or
    second-stage sidelink control information SCI.

3. The method according to claim 2, wherein in a case that a DM-RS pattern selected by the first terminal device comprises a first DM-RS symbol that overlaps the time domain location of the second candidate transmission starting symbol, the first DM-RS symbol is mapped to a previous symbol or a subsequent symbol of the second candidate transmission starting symbol.

4. The method according to claim 2, wherein

    the first terminal device does not expect to select a DM-RS pattern comprising a DM-RS symbol that overlaps the time domain location of the second candidate transmission starting symbol; or
the first terminal device does not expect to receive a DM-RS pattern comprising a DM-RS symbol that overlaps the time domain location of the second candidate transmission starting symbol.

5. The method according to claim 2, wherein the method further comprises:
acquiring, by the first terminal device, first configuration information, wherein the first configuration information is used to configure a DM-RS pattern available in a resource pool, and any DM-RS pattern configured by using the first configuration information does not comprise a symbol that overlaps the time domain location of the second candidate transmission starting symbol.

6. The method according to claim 2, wherein a symbol index corresponding to the second candidate transmission starting symbol is greater than a symbol index corresponding to a last symbol in symbols used to map the first PSCCH.

7. The method according to claim 6, wherein a symbol index corresponding to the first candidate transmission starting symbol is $I_1$, a symbol index corresponding to the second candidate transmission starting symbol is $I_2$, and a quantity of symbols corresponding to the first PSCCH is A, wherein $I_2 > I_1 + A$ or $I_2 \geq I_1 + A + 1$.

8. The method according to claim 2, wherein in a case that a symbol used to map the second-stage SCI overlaps the time domain location of the second candidate transmission starting symbol, the second-stage SCI is mapped from a subsequent symbol of the second candidate transmission starting symbol.

9. The method according to claim 2, wherein in a case that a symbol used to map the first PSSCH overlaps the time domain location of the second candidate transmission starting symbol, the first PSSCH is mapped from a subsequent symbol of the second candidate transmission starting symbol.

10. The method according to claim 2, wherein the method further comprises:
generating or acquiring, by the first terminal device, second configuration information, wherein the second configuration information is used to configure a symbol of the first CSI-RS, and the symbol of the first CSI-RS does not comprise a symbol that overlaps the time domain location of the second candidate transmission starting symbol.

11. The method according to claim 2, wherein in a case that a symbol used to map the first CSI-RS overlaps the time domain location of the second candidate transmission starting symbol, a symbol of the first CSI-RS is mapped to a previous symbol or a subsequent symbol of the second candidate transmission starting symbol.

12. The method according to any one of claims 1 to 11, wherein the second candidate transmission starting symbol is used to carry duplicate data of data in a previous symbol or a subsequent symbol of the second candidate transmission starting symbol.

13. A sidelink transmission method, comprising:

performing, by a first terminal device, sidelink transmission in a first slot,
wherein the first slot at least comprises a first candidate transmission starting symbol and a second candidate transmission starting symbol, and a time domain location of the second candidate transmission starting symbol is after a time domain location of the first candidate transmission starting symbol; and
the first candidate transmission starting symbol corresponds to a first demodulation reference signal DM-RS pattern, the second candidate transmission starting symbol corresponds to a second DM-RS pattern, and the second DM-RS pattern is determined based on one or more of following:

resource pool configuration information; or
the first DM-RS pattern.

14. The method according to claim 13, wherein the second DM-RS pattern being determined based on the resource pool configuration information comprises that:
the resource pool configuration information comprises first configuration information and second configuration information, the first configuration information is used to configure the first DM-RS pattern, and the second configuration information is used to configure the second DM-RS pattern.

15. The method according to claim 14, wherein

in a case that the first terminal device performs sidelink transmission starting from the first candidate transmission starting symbol, first-stage sidelink control information SCI transmitted by the first terminal device is used to indicate index information associated with the first DM-RS pattern; or

in a case that the first terminal device performs sidelink transmission starting from the second candidate transmission starting symbol, first-stage SCI transmitted by the first terminal device is used to indicate index information associated with the second DM-RS pattern.

16. The method according to claim 13, wherein the second DM-RS pattern being determined based on the first DM-RS pattern comprises that:

the second DM-RS pattern is determined based on a first relative location, and the first relative location is determined based on a relative location between a DM-RS symbol in the first DM-RS pattern and the first candidate transmission starting symbol.

17. The method according to claim 16, wherein a symbol index corresponding to the second DM-RS pattern is determined based on the first relative location and the second candidate transmission starting symbol.

18. The method according to claim 16 or 17, wherein

an index of the second DM-RS pattern is determined based on an index of the first DM-RS pattern; or
an index of the second DM-RS pattern is the same as an index of the first DM-RS pattern.

19. The method according to any one of claims 16 to 18, wherein the method further comprises:
acquiring, by the first terminal device, resource pool configuration information, wherein the resource pool configuration information comprises third configuration information, and the third configuration information is used to configure the first DM-RS pattern.

20. The method according to any one of claims 16 to 19, wherein

in a case that the first terminal device performs sidelink transmission starting from the first candidate transmission starting symbol, first-stage SCI transmitted by the first terminal device is used to indicate an index associated with the first DM-RS pattern; or
in a case that the first terminal device performs sidelink transmission starting from the second candidate transmission starting symbol, first-stage SCI transmitted by the first terminal device is used to indicate an index associated with the first DM-RS pattern.

21. A sidelink transmission method, comprising:
determining, by a first terminal device, a transport block size corresponding to a physical sidelink shared channel PSSCH in a first slot based on one or more of following parameters:

a first parameter, indicating a quantity of sidelink symbols;
a second parameter, indicating a quantity of resource elements REs; and
a third parameter, indicating a quantity of physical resource blocks PRBs,
wherein the first slot at least comprises a first candidate transmission starting symbol and a second candidate transmission starting symbol that have different time domain locations.

22. The method according to claim 21, wherein the first parameter is determined based on one or more of following:

a quantity of symbols that are used for sidelink transmission and determined based on the first candidate transmission starting symbol; or
a quantity of symbols that are used for sidelink transmission and determined based on the second candidate transmission starting symbol.

23. The method according to claim 22, wherein the symbols that are used for sidelink transmission and determined based on the first candidate transmission starting symbol do not comprise one or more of following:

a last symbol for sidelink transmission in the first slot;
the first candidate transmission starting symbol; or
the second candidate transmission starting symbol.

24. The method according to claim 22 or 23, wherein the symbols that are used for sidelink transmission and determined based on the second candidate transmission starting symbol do not comprise one or more of following:

a last symbol for sidelink transmission in the first slot; or
the second candidate transmission starting symbol.

25. The method according to any one of claims 22 to 24, wherein the quantity of symbols that are used for sidelink transmission and determined based on the first candidate transmission starting symbol is a first quantity, the quantity of symbols that are used for sidelink transmission and determined based on the second candidate transmission starting symbol is a second quantity, and the first parameter is determined based on one or more of following:

a value of the first parameter is equal to the first quantity;
a value of the first parameter is equal to the second quantity;
a value of the first parameter is equal to a maximum value, a minimum value, or an average value of the first quantity and the second quantity;
in a case that a symbol index corresponding to the second candidate transmission starting symbol is greater than or equal to a first threshold, a value of the first parameter is equal to the second quantity;
in a case that a symbol index corresponding to the second candidate transmission starting symbol is less than the first threshold, a value of the first parameter is equal to the first quantity;
in a case that a symbol index corresponding to the second candidate transmission starting symbol is less than or equal to a second threshold, a value of the first parameter is equal to the second quantity;
in a case that a symbol index corresponding to the second candidate transmission starting symbol is greater than the second threshold, a value of the first parameter is equal to the first quantity;
in a case that the second quantity is greater than or equal to a third threshold, a value of the first parameter is equal to the second quantity;
in a case that the second quantity is less than the third threshold, a value of the first parameter is equal to the first quantity;
in a case that the second quantity is less than or equal to a fourth threshold, a value of the first parameter is equal to the second quantity; or
in a case that the second quantity is greater than the fourth threshold, a value of the first parameter is equal to the first quantity.

26. The method according to any one of claims 21 to 25, wherein the second parameter is determined based on one or more of following:

a quantity of REs determined based on a first DM-RS pattern; or
a quantity of REs determined based on a second DM-RS pattern,
wherein the first DM-RS pattern corresponds to the first candidate transmission starting symbol, and the second DM-RS pattern corresponds to the second candidate transmission starting symbol.

27. The method according to claim 26, wherein the method further comprises:
acquiring, by the first terminal device, first configuration information and second configuration information, wherein the first configuration information is used to configure the first DM-RS pattern, and the second configuration information is used to configure the second DM-RS pattern.

28. The method according to claim 26, wherein the method further comprises:
acquiring, by the first terminal device, third configuration information, wherein the third configuration information is used to configure the first DM-RS pattern, and the second DM-RS pattern is determined based on the first DM-RS pattern.

29. The method according to claim 28, wherein the second DM-RS pattern being determined based on the first DM-RS pattern comprises that:
the second DM-RS pattern is determined based on a first relative location, and the first relative location is determined based on a relative location between a DM-RS symbol in the first DM-RS pattern and the first candidate transmission starting symbol.

30. The method according to claim 29, wherein a symbol index corresponding to the second DM-RS pattern is determined based on the first relative location and the second candidate transmission starting symbol.

31. The method according to any one of claims 26 to 30, wherein the second parameter is determined based on a maximum value, a minimum value, or an average value of a third quantity and a fourth quantity, the third quantity is a quantity of REs determined based on a first DM-RS pattern, and the fourth quantity is a quantity of REs determined based on a second DM-RS pattern.

32. The method according to any one of claims 21 to 31, wherein at least one of the first parameter or the second parameter is determined based on pre-configuration information or configuration information of a network device.

33. The method according to any one of claims 21 to 31, wherein at least one of the first parameter or the second parameter is determined based on indication information transmitted by a second terminal device.

34. The method according to claim 33, wherein the indication information is carried by using sidelink control information SCI, a medium access control control element MAC CE, or a PC5-radio resource control RRC.

35. The method according to any one of claims 21 to 34, wherein the third parameter is determined based on one or more of following information:

    sub-channel information;
    interlace information;
    pre-configuration information; or
    network configuration information.

36. The method according to claim 35, wherein the sub-channel information comprises one or more of following:

    a sub-channel size;
    an average value of a quantity of PRBs comprised in a sub-channel;
    a maximum value of a quantity of PRBs comprised in a sub-channel;
    a minimum value of a quantity of PRBs comprised in a sub-channel;
    a quantity of sub-channels corresponding to a frequency domain resource of the PSSCH; or
    a quantity of interlaces comprised in a sub-channel.

37. The method according to claim 35 or 36, wherein the interlace information comprises:

    an average value of a quantity of PRBs comprised in an interlace;
    a maximum value of a quantity of PRBs comprised in an interlace;
    a minimum value of a quantity of PRBs comprised in an interlace; or
    a quantity of interlaces corresponding to a frequency domain resource of the PSSCH.

38. A terminal device, wherein the terminal device is a first terminal device, and the first terminal device comprises:

    a communications module, configured to perform sidelink transmission in a first slot,
    wherein the first slot at least comprises a first candidate transmission starting symbol and a second candidate transmission starting symbol, and a time domain location of the second candidate transmission starting symbol is after a time domain location of the first candidate transmission starting symbol; and
    the second candidate transmission starting symbol is not used to map a first signal/channel corresponding to transmission that is based on the first candidate transmission starting symbol.

39. The terminal device according to claim 38, wherein the first signal/channel comprises one or more of following information:

    a first physical sidelink shared channel PSSCH;
    a first physical sidelink control channel PSCCH;
    a channel state information reference signal CSI-RS;
    a demodulation reference signal DM-RS of the first PSSCH; or
    second-stage sidelink control information SCI.

40. The terminal device according to claim 39, wherein in a case that a DM-RS pattern selected by the first terminal device comprises a first DM-RS symbol that overlaps the time domain location of the second candidate transmission starting symbol, the first DM-RS symbol is mapped to a previous symbol or a subsequent symbol of the second candidate transmission starting symbol.

**41.** The terminal device according to claim 39, wherein

the first terminal device does not expect to select a DM-RS pattern comprising a DM-RS symbol that overlaps the time domain location of the second candidate transmission starting symbol; or
the first terminal device does not expect to receive a DM-RS pattern comprising a DM-RS symbol that overlaps the time domain location of the second candidate transmission starting symbol.

**42.** The terminal device according to claim 39, further comprising:
a first acquiring module, configured to acquire first configuration information, wherein the first configuration information is used to configure a DM-RS pattern available in a resource pool, and any DM-RS pattern configured by using the first configuration information does not comprise a symbol that overlaps the time domain location of the second candidate transmission starting symbol.

**43.** The terminal device according to claim 39, wherein a symbol index corresponding to the second candidate transmission starting symbol is greater than a symbol index corresponding to a last symbol in symbols used to map the first PSCCH.

**44.** The terminal device according to claim 43, wherein a symbol index corresponding to the first candidate transmission starting symbol is $I_1$, a symbol index corresponding to the second candidate transmission starting symbol is $I_2$, and a quantity of symbols corresponding to the first PSCCH is A, wherein $I_2 > I_1 + A$ or $I_2 \geq I_1 + A + 1$.

**45.** The terminal device according to claim 39, wherein in a case that a symbol used to map the second-stage SCI overlaps the time domain location of the second candidate transmission starting symbol, the second-stage SCI is mapped from a subsequent symbol of the second candidate transmission starting symbol.

**46.** The terminal device according to claim 39, wherein in a case that a symbol used to map the first PSSCH overlaps the time domain location of the second candidate transmission starting symbol, the first PSSCH is mapped from a subsequent symbol of the second candidate transmission starting symbol.

**47.** The terminal device according to claim 39, further comprising:
a second acquiring module, configured to generate or acquire second configuration information, wherein the second configuration information is used to configure a symbol of the first CSI-RS, and the symbol of the first CSI-RS does not comprise a symbol that overlaps the time domain location of the second candidate transmission starting symbol.

**48.** The terminal device according to claim 39, wherein in a case that a symbol used to map the first CSI-RS overlaps the time domain location of the second candidate transmission starting symbol, a symbol of the first CSI-RS is mapped to a previous symbol or a subsequent symbol of the second candidate transmission starting symbol.

**49.** The terminal device according to any one of claims 38 to 48, wherein the second candidate transmission starting symbol is used to carry duplicate data of data in a previous symbol or a subsequent symbol of the second candidate transmission starting symbol.

**50.** A terminal device, wherein the terminal device is a first terminal device, and the first terminal device comprises:

a communications module, configured to perform sidelink transmission in a first slot,
wherein the first slot at least comprises a first candidate transmission starting symbol and a second candidate transmission starting symbol, and a time domain location of the second candidate transmission starting symbol is after a time domain location of the first candidate transmission starting symbol; and
the first candidate transmission starting symbol corresponds to a first demodulation reference signal DM-RS pattern, the second candidate transmission starting symbol corresponds to a second DM-RS pattern, and the second DM-RS pattern is determined based on one or more of following:

resource pool configuration information; or
the first DM-RS pattern.

51. The terminal device according to claim 50, wherein the second DM-RS pattern being determined based on the resource pool configuration information comprises that:
the resource pool configuration information comprises first configuration information and second configuration information, the first configuration information is used to configure the first DM-RS pattern, and the second configuration information is used to configure the second DM-RS pattern.

52. The terminal device according to claim 51, wherein

in a case that the first terminal device performs sidelink transmission starting from the first candidate transmission starting symbol, first-stage sidelink control information SCI transmitted by the first terminal device is used to indicate index information associated with the first DM-RS pattern; or
in a case that the first terminal device performs sidelink transmission starting from the second candidate transmission starting symbol, first-stage SCI transmitted by the first terminal device is used to indicate index information associated with the second DM-RS pattern.

53. The terminal device according to claim 50, wherein the second DM-RS pattern being determined based on the first DM-RS pattern comprises that:
the second DM-RS pattern is determined based on a first relative location, and the first relative location is determined based on a relative location between a DM-RS symbol in the first DM-RS pattern and the first candidate transmission starting symbol.

54. The terminal device according to claim 53, wherein a symbol index corresponding to the second DM-RS pattern is determined based on the first relative location and the second candidate transmission starting symbol.

55. The terminal device according to claim 53 or 54, wherein

an index of the second DM-RS pattern is determined based on an index of the first DM-RS pattern; or
an index of the second DM-RS pattern is the same as an index of the first DM-RS pattern.

56. The terminal device according to any one of claims 53 to 55, wherein the terminal device further comprises:
a first acquiring module, configured to acquire resource pool configuration information, wherein the resource pool configuration information comprises third configuration information, and the third configuration information is used to configure the first DM-RS pattern.

57. The terminal device according to any one of claims 53 to 56, wherein

in a case that the first terminal device performs sidelink transmission starting from the first candidate transmission starting symbol, first-stage SCI transmitted by the first terminal device is used to indicate an index associated with the first DM-RS pattern; or
in a case that the first terminal device performs sidelink transmission starting from the second candidate transmission starting symbol, first-stage SCI transmitted by the first terminal device is used to indicate an index associated with the first DM-RS pattern.

58. A terminal device, wherein the terminal device is a first terminal device, and the first terminal device comprises:
a determining module, configured to determine a transport block size corresponding to a physical sidelink shared channel PSSCH in a first slot based on one or more of following parameters:

a first parameter, indicating a quantity of sidelink symbols;
a second parameter, indicating a quantity of resource elements REs; and
a third parameter, indicating a quantity of physical resource blocks PRBs,
wherein the first slot at least comprises a first candidate transmission starting symbol and a second candidate transmission starting symbol that have different time domain locations.

59. The terminal device according to claim 58, wherein the first parameter is determined based on one or more of following:

a quantity of symbols that are used for sidelink transmission and determined based on the first candidate transmission starting symbol; or

a quantity of symbols that are used for sidelink transmission and determined based on the second candidate transmission starting symbol.

60. The terminal device according to claim 59, wherein the symbols that are used for sidelink transmission and determined based on the first candidate transmission starting symbol do not comprise one or more of following:

a last symbol for sidelink transmission in the first slot;
the first candidate transmission starting symbol; or
the second candidate transmission starting symbol.

61. The terminal device according to claim 59 or 60, wherein the symbols that are used for sidelink transmission and determined based on the second candidate transmission starting symbol do not comprise one or more of following:

a last symbol for sidelink transmission in the first slot; or
the second candidate transmission starting symbol.

62. The terminal device according to any one of claims 59 to 61, wherein the quantity of symbols that are used for sidelink transmission and determined based on the first candidate transmission starting symbol is a first quantity, the quantity of symbols that are used for sidelink transmission and determined based on the second candidate transmission starting symbol is a second quantity, and the first parameter is determined based on one or more of following:

a value of the first parameter is equal to the first quantity;
a value of the first parameter is equal to the second quantity;
a value of the first parameter is equal to a maximum value, a minimum value, or an average value of the first quantity and the second quantity;
in a case that a symbol index corresponding to the second candidate transmission starting symbol is greater than or equal to a first threshold, a value of the first parameter is equal to the second quantity;
in a case that a symbol index corresponding to the second candidate transmission starting symbol is less than the first threshold, a value of the first parameter is equal to the first quantity;
in a case that a symbol index corresponding to the second candidate transmission starting symbol is less than or equal to a second threshold, a value of the first parameter is equal to the second quantity;
in a case that a symbol index corresponding to the second candidate transmission starting symbol is greater than the second threshold, a value of the first parameter is equal to the first quantity;
in a case that the second quantity is greater than or equal to a third threshold, a value of the first parameter is equal to the second quantity;
in a case that the second quantity is less than the third threshold, a value of the first parameter is equal to the first quantity;
in a case that the second quantity is less than or equal to a fourth threshold, a value of the first parameter is equal to the second quantity; or
in a case that the second quantity is greater than the fourth threshold, a value of the first parameter is equal to the first quantity.

63. The terminal device according to any one of claims 58 to 62, wherein the second parameter is determined based on one or more of following:

a quantity of REs determined based on a first DM-RS pattern; or
a quantity of REs determined based on a second DM-RS pattern,
wherein the first DM-RS pattern corresponds to the first candidate transmission starting symbol, and the second DM-RS pattern corresponds to the second candidate transmission starting symbol.

64. The terminal device according to claim 63, further comprising:
a first acquiring module, configured to acquire first configuration information and second configuration information, wherein the first configuration information is used to configure the first DM-RS pattern, and the second configuration information is used to configure the second DM-RS pattern.

65. The terminal device according to claim 63, further comprising:
a second acquiring module, configured to acquire third configuration information, wherein the third configuration information is used to configure the first DM-RS pattern, and the second DM-RS pattern is determined based on the first DM-RS pattern.

66. The terminal device according to claim 65, wherein the second DM-RS pattern being determined based on the first DM-RS pattern comprises that:
the second DM-RS pattern is determined based on a first relative location, and the first relative location is determined based on a relative location between a DM-RS symbol in the first DM-RS pattern and the first candidate transmission starting symbol.

67. The terminal device according to claim 66, wherein a symbol index corresponding to the second DM-RS pattern is determined based on the first relative location and the second candidate transmission starting symbol.

68. The terminal device according to any one of claims 63 to 67, wherein the second parameter is determined based on a maximum value, a minimum value, or an average value of a third quantity and a fourth quantity, the third quantity is a quantity of REs determined based on a first DM-RS pattern, and the fourth quantity is a quantity of REs determined based on a second DM-RS pattern.

69. The terminal device according to any one of claims 58 to 68, wherein at least one of the first parameter or the second parameter is determined based on pre-configuration information or configuration information of a network device.

70. The terminal device according to any one of claims 58 to 68, wherein at least one of the first parameter or the second parameter is determined based on indication information transmitted by a second terminal device.

71. The terminal device according to claim 70, wherein the indication information is carried by using sidelink control information SCI, a medium access control control element MAC CE, or a PC5-radio resource control RRC.

72. The terminal device according to any one of claims 58 to 71, wherein the third parameter is determined based on one or more of following information:

sub-channel information;
interlace information;
pre-configuration information; or
network configuration information.

73. The terminal device according to claim 72, wherein the sub-channel information comprises one or more of following:

a sub-channel size;
an average value of a quantity of PRBs comprised in a sub-channel;
a maximum value of a quantity of PRBs comprised in a sub-channel;
a minimum value of a quantity of PRBs comprised in a sub-channel;
a quantity of sub-channels corresponding to a frequency domain resource of the PSSCH; or
a quantity of interlaces comprised in a sub-channel.

74. The terminal device according to claim 72 or 73, wherein the interlace information comprises:

an average value of a quantity of PRBs comprised in an interlace;
a maximum value of a quantity of PRBs comprised in an interlace;
a minimum value of a quantity of PRBs comprised in an interlace; or
a quantity of interlaces corresponding to a frequency domain resource of the PSSCH.

75. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 12, 13 to 20, or 21 to 37.

76. An apparatus, comprising a processor configured to invoke a program from a memory, to cause the apparatus to execute the method according to any one of claims 1 to 12, 13 to 20, or 21 to 37.

77. A chip, comprising a processor, configured to invoke a program from a memory to cause a device installed with the chip to execute the method according to any one of claims 1 to 12, 13 to 20, or 21 to 37.

78. A computer-readable storage medium, wherein the computer-readable storage medium stores a program, and the program causes a computer to execute the method according to any one of claims 1 to 12, 13 to 20, or 21 to 37.

79. A computer program product, comprising a program, wherein the program causes a computer to execute the method according to any one of claims 1 to 12, 13 to 20, or 21 to 37.

80. A computer program, wherein the computer program causes a computer to execute the method according to any one of claims 1 to 12, 13 to 20, or 21 to 37.

FIG. 1

FIG. 2

110

120a        120b

Sidelink
communication

FIG. 3

120b        120b

Sidelink
communication

FIG. 4

**Communication
group**

Terminal
device 1

Resource
allocation

Resource
alloation

Terminal
device 2

Terminal
device 3

Sidelink
communication

FIG. 5

Terminal device 2

Terminal device 6

Terminal device 3

**Terminal device 1**

Terminal device 5

Terminal device 4

FIG. 6

Terminal device 1                Terminal device 2

Sidelink data

FIG. 7

**Communication group**

Terminal
device 2

Terminal
device 1

Terminal
device 3

Terminal
device 4

FIG. 8

FIG. 9A

FIG. 9B

FIG. 10

FIG. 11

|  | Symbol #1 | Symbol #2 | Symbol #3 |
|---|---|---|---|
| RE#11 | | | |
| RE#10 | | | |
| RE#9 | DM-RS | DM-RS | DM-RS |
| RE#8 | | | |
| RE#7 | | | |
| RE#6 | | | |
| RE#5 | DM-RS | DM-RS | DM-RS |
| RE#4 | | | |
| RE#3 | | | |
| RE#2 | | | |
| RE#1 | DM-RS | DM-RS | DM-RS |
| RE#0 | | | |

FIG. 12

| AGC | DMRS / PSCCH | | | DMRS | | DMRS | | DMRS | | | | GP |
|---|---|---|---|---|---|---|---|---|---|---|---|---|
| 0 | 1 | 2 | 3 | 4 | 5 | 6 | 7 | 8 | 9 | 10 | 11 | 12 | 13 |

FIG. 13

| RE#0 | RE#1 | RE#2 | RE#3 | RE#4 | RE#5 | RE#6 | RE#7 | RE#8 | RE#9 | RE#10 | RE#11 |
|---|---|---|---|---|---|---|---|---|---|---|---|
| Port 1/Port 0 | | Port 1/Port 0 | | Port 1/Port 0 | | Port 1/Port 0 | | Port 1/Port 0 | | Port 1/Port 0 | |

FIG. 14

Denotes a resource occupied by second-stage SCI

Denotes a resource occupied by a CSI-RS

Denotes a resource occupied by AGC

Denotes a resource occupied by a PSSCH reference signal

PSSCH

| | RE11 | RE10 | RE9 | RE8 | RE7 | RE6 | RE5 | RE4 | RE3 | RE2 | RE1 | RE0 |

0  1  2  3  4  5  6  7  8  9  10  11  12  13

FIG. 15

Channel occupancy time

LBT is successful

Time domain

FIG. 16

PRB

☒ Interlace 1          ☒ Interlace 2

FIG. 17

60MHz carrier bandwidth

| 20MHz | | 20MHz | | 20MHz |
|---|---|---|---|---|
| LBT sub-band 1 | Guard band | LBT sub-band 2 | Guard band | LBT sub-band 3 |

FIG. 18

FIG. 19

LBT is successful

(a)

LBT is successful

(b)

FIG. 20

Perform, by a first terminal device, sidelink
transmission in a first slot

2110

FIG. 21

First candidate
transmission starting
symbol

DM-RS symbol

Second candidate
transmission starting symbol

FIG. 22

DM-RS symbol

(a) A DMRS symbol is mapped to a subsequent symbol of a second candidate transmission starting symbol

DM-RS symbol

(b) A DMRS symbol is mapped to a previous symbol of a second candidate transmission starting symbol

FIG. 23

(a) First candidate transmission starting symbol 0

(b) An adjustment mapping mode of second-stage SCI

(c) Second candidate transmission starting symbol 4

AGC          PSSCH          PSCCH          Second-stage SCI

FIG. 24

First PSSCH

Candidate transmission
starting symbol

(a) First candidate transmission
starting symbol 0

(b) Second candidate transmission
starting symbol 6

FIG. 25

DM-RS

Candidate transmission starting symbol

(a) DM-RS pattern 1

(b) DM-RS pattern 2

(c) DM-RS pattern 3

(d) DM-RS pattern 4

FIG. 26

DM-RS

Candidate transmission starting symbol

(a) DM-RS pattern 1

(d) DM-RS pattern 1'

(b) DM-RS pattern 2

(e) DM-RS pattern 2'

(c) DM-RS pattern 3

(f) DM-RS pattern 3'

FIG. 27

Determine, by a first terminal device, a transport block size corresponding to a PSSCH in a first slot — 2810

FIG. 28

Terminal device 2900

Communications module 2910

FIG. 29

Terminal device 3000

Communications module
3010

FIG. 30

Terminal device 3100

Determining module
3110

FIG. 31

Apparatus 3200

Processor
3210

Memory
3220

Transceiver
3230

FIG. 32

## INTERNATIONAL SEARCH REPORT

| International application No. |
| --- |
| **PCT/CN2022/129678** |

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, VEN, 3GPP, CNKI: 物理侧行共享信道, 物理侧行控制信道, 侧行, 侧链, 时隙, 起始, 符号, 位置, DMRS, 图样, 映射, 传输块, 尺寸, PSSCH, PSCCH, sidelink, timeslot, start, symbol, position, pattern, map, transmission block, TB, size

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022036703 A1 (LENOVO BEIJING LTD.) 24 February 2022 (2022-02-24) description, paragraphs 63-64 | 13-15, 21-37, 50-52, 58-80 |
| Y | CN 114868447 A (GUANGDONG OPPO MOBILE COMMUNICATIONS CO., LTD.) 05 August 2022 (2022-08-05) description, paragraph 160 | 13-15, 50-52, 75-80 |
| Y | CN 112714497 A (HUAWEI TECHNOLOGIES CO., LTD.) 27 April 2021 (2021-04-27) description, paragraphs 187-227 | 21-37, 58-80 |
| Y | CN 115190644 A (NOKIA SHANGHAI BELL CO., LTD.; NOKIA SOLUTIONS AND NETWORKS OY) 14 October 2022 (2022-10-14) description, paragraph 53 | 13-15, 21-37, 50-52, 58-80 |
| A | WO 2022036703 A1 (LENOVO BEIJING LTD.) 24 February 2022 (2022-02-24) entire document | 1-12, 16-20, 38-49, 53-57 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 July 2023** | **10 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 614 897 A1

## INTERNATIONAL SEARCH REPORT
### Information on patent family members

International application No.

**PCT/CN2022/129678**

| Patent document cited in search report | | | Publication date (day/month/year) | Patent family member(s) | | | Publication date (day/month/year) |
|---|---|---|---|---|---|---|---|
| WO | 2022036703 | A1 | 24 February 2022 | KR | 20230054366 | A | 24 April 2023 |
| CN | 114868447 | A | 05 August 2022 | None | | | |
| CN | 112714497 | A | 27 April 2021 | None | | | |
| CN | 115190644 | A | 14 October 2022 | None | | | |

Form PCT/ISA/210 (patent family annex) (July 2022)